# EUROPÄISCHE PATENTSCHRIFT

(11) **EP 4 612 627 B1**
(45) Veröffentlichungstag und Bekanntmachung des Hinweises auf die Patenterteilung: **14.10.2026**
(21) Anmeldenummer: 23800822.1
(22) Anmeldetag: 02.11.2023
(51) Int. Cl.: G06Q 10/063

(54) **ORCHESTRATOR-BASIERTES FORSCHUNGS- UND ENTWICKLUNGSSYSTEM UND VERFAHREN ZU DESSEN BETRIEB**
ORCHESTRATOR-BASED RESEARCH AND DEVELOPMENT SYSTEM AND METHOD FOR OPERATION THEREOF
SYSTÈME DE RECHERCHE ET DE DÉVELOPPEMENT BASÉ SUR UN ORCHESTRATEUR ET SON PROCÉDÉ DE FONCTIONNEMENT

(30) Priorität: 04.11.2022 DE 102022211634
(43) Veröffentlichungstag der Anmeldung: 10.09.2025
(73) Patentinhaber: Forschungszentrum Jülich GmbH, 52428 Jülich (DE)
(72) Erfinder: MALEK, Kourosh, 52428 Jülich (DE); EIKERLING, Michael, Köln 50858 (DE); NAVESSIN, Titichai, Vancouver, British Columbia V6J0B1 (CA); DREGER, Max, Köln 50931 (DE)
(74) Vertreter: Gille Hrabal Partnerschaftsgesellschaft mbB Patentanwälte
(86) Internationale Anmeldenummer: PCT/EP2023/080571
(87) Internationale Veröffentlichungsnummer: WO 2024/094798

(56) Entgegenhaltungen:
- WO-A1-2021/178649
- DE-T5- 112019 001 136

## Beschreibung

Die vorliegende Erfindung bezieht sich auf ein Forschungs- und Entwicklungssystem zur Erforschung und/oder Entwicklung von Produkten und Herstellungsverfahren für Produkte, insbesondere Energiematerialien. Es umfasst eine Graphdatenbank, eine Datenverarbeitungseinheit und eine Ausführungseinheit. Das System ist eingerichtet Arbeitsschritte eines Forschungs- und Entwicklungsvorhabens in einem optimierten Workflow zu verbinden, mit heterogenen Systemen zu arbeiten und heterogene Ergebnisdaten konsolidiert und gemäß einer gemeinsamen Ontologie zu speichern. Die Erfindung bezieht sich zudem auf ein Verfahren zum Betrieb eines erfindungsgemäßen Forschungs- und Entwicklungssystem.

### TECHNISCHES GEBIET

Die Erfindung betrifft Forschungs- und Entwicklungssystem zur Erforschung und/oder Entwicklung (F&E) von Produkten und Verfahren zur Herstellung von Produkten, insbesondere Energiematerialien und deren Integration. Die Erfindung betrifft ferner ein Verfahren zum Betrieb eines erfindungsgemäßen F&E-Systems.

### HINTERGRUND UND STAND DER TECHNIK

Heutige Systeme und Verfahren zur Unterstützung von Forschung und Entwicklung von Produkten und Verfahren zur Herstellung von Produkten, insbesondere Energiematerialien, erfordern einen hohen zeitlichen und personellen Aufwand, sind fehler- und störungsanfällig und liefern häufig suboptimale Ergebnisse.

WO 2021/178649 A1 offenbart eine algorithmische Lernengine zur dynamischen Generierung prädiktiver Analysen aus großvolumigen, hochgeschwindigkeitsbasierten, Streaming-Daten.

DE 11 2019 001136 T5 bezieht sich auf die Bereitstellung von Mechanismen zur Implementierung eines Rahmens zum Lernen über Zusammenhänge zwischen mehreren Arzneimitteln und unerwünschten Arzneimittelwirkungen.

### AUFGABE DER ERFINDUNG

Der Erfindung liegt daher die Aufgabe zugrunde, ein verbessertes Forschungs- und Entwicklungssystem sowie ein Verfahren zum Betrieb eines Forschungs- und Entwicklungssystem zur Erforschung und/oder Entwicklung von Produkten und Verfahren zur Herstellung von Produkten, insbesondere Energiematerialien, bereitzustellen.

### BESCHREIBUNG

Diese Aufgabe wird durch ein Forschungs- und Entwicklungssystem zur Erforschung und/oder Entwicklung nach Anspruch 1 und ein Verfahren zum Betrieb eines erfindungsgemäßen Forschungs- und Entwicklungssystems nach Anspruch 8 gelöst. Bevorzugte Ausführungsformen der vorliegenden Erfindung sind in den abhängigen Ansprüchen beschrieben. Die bevorzugten Ausführungsformen helfen, ein verbessertes Forschungs- und Entwicklungssystem und ein verbessertes Verfahren zu dessen Betrieb bereitzustellen.

Das erfindungsgemäße Forschungs- und Entwicklungssystem ist zur Erforschung und/oder Entwicklung von Produkten und Herstellungsverfahren für Produkte, insbesondere Energiematerialien geeignet. Es umfasst eine Datenbank, eine Schnittstelle zur Eingabe und Ausgabe von Daten, eine Datenverarbeitungseinheit und eine Ausführungseinheit. Dabei ist die Datenbank eine Graphdatenbank, die eingerichtet ist, Daten gemäß eines Datenmodells abzuspeichern, welches eine wohldefinierte Ontologie abbildet.

Dabei kann die Datenverarbeitungseinheit eingerichtet sein, die in der Graphdatenbank gespeicherten Daten zu vereinheitlichen, zu ergänzen, und/oder anzureichern. Zudem kann die Datenverarbeitungseinheit eingerichtet sein, statistische und/oder kausale Zusammenhänge zwischen Daten in der Datenbank zu identifizieren und diese Zusammenhänge mittels statistischer Modelle und/oder physikalisch-chemischer Modelle zu modellieren. Weiter kann die Datenverarbeitungseinheit eingerichtet sein, in den gespeicherten Daten Forschungs- und Entwicklungsziele zu identifizieren und/oder zur Erreichung von Forschungs- und Entwicklungszielen geeignete Workflows und/oder Arbeitsschritte zu generieren und/oder anzupassen.

Dabei kann die Ausführungseinheit eingerichtet sein, einen Workflow zur Erreichung eines Entwicklungsziels in Abhängigkeit des Entwicklungsziels auszuwählen. Zudem kann die Ausführungseinheit eingerichtet sein, einen nächsten Arbeitsschritt aus einer Menge von Arbeitsschritten eines ausgewählten Workflows auszuwählen, insbesondere in Abhängigkeit von einem vorausgegangenen Arbeitsschritt und/oder einem Ergebnis eines vorausgegangenen Arbeitsschritts.

In einer Ausführung kann die Ausführungseinheit eingerichtet sein, ein Endgerät zur Durchführung eines Arbeitsschritts auszuwählen, insbesondere in Abhängigkeit der Art, des Umfangs und/oder des Zeitpunkts des durchzuführenden Arbeitsschritts und/oder der Art, des Umfangs, des Zeitpunkts und/oder dem Status der Erfüllung der Bedingungen der Verfügbarkeit des Endgeräts.

In einer weiteren Ausführung kann das Forschungs- und Entwicklungssystem eine Datenerfassungseinheit umfassen. Die Datenerfassungseinheit kann eingerichtet sein, für ein ausgewähltes Forschungsziel relevante Informationen, insbesondere Fachartikel, Publikationen, Versuchsreihen, Vorträge, Kommentierungen und/oder sonstige relevante Aufzeichnungen und/oder Dokumentationen zu lokalisieren, zu erfassen und/oder in der Graphdatenbank zu speichern. Die Datenerfassungseinheit kann weiter eingerichtet sein, ein Ergebnis einer Durchführung eines Arbeitsschritts durch ein Endgerät zu lokalisieren, zu erfassen, bezüglich der Entstehung und Herkunft zu kennzeichnen und/oder in der Graphdatenbank zu speichern.

In einer Ausführung kann die Datenerfassungseinheit eingerichtet sein, Informationen zu Art, Umfang und/oder Zeitpunkt der Verfügbarkeit und/oder Nicht-Verfügbarkeit eines Endgeräts zu erfassen und/oder in der Graphdatenbank zu speichern. Zudem kann die Datenerfassungseinheit eingerichtet sein, Informationen zu technischen, administrativen, rechtlichen, vertraglichen und/oder sonstigen Bedingungen der Verfügbarkeit eines Endgeräts und zum Status der Erfüllung der Bedingungen der Verfügbarkeit zu erfassen und/oder in der Graphdatenbank zu speichern.

In einer Ausführung umfasst das Forschungs- und Entwicklungssystem eine interaktive Mensch-Maschine-Schnittstelle. Diese kann eingerichtet sein, Ergebnisse eines Arbeitsschritts und oder der Arbeitsschritte eines Workflows graphisch darzustellen und/oder einen Workflow, einen Arbeitsschritt, die Verfügbarkeit eines Endgeräts zur Durchführung eines Arbeitsschritts darzustellen. Ebenso kann die interaktive Mensch-Maschine-Schnittstelle eingerichtet sein, eine Eingabe eines menschlichen Nutzers zur Auswahl eines durchzuführenden Workflows, Arbeitsschritts und/oder Endgerät zur Durchführung eines Arbeitsschritts zu empfangen.

In einer Ausführung umfasst das Forschungs- und Entwicklungssystem einen Server, ein Cloud-System, ein Endgerät, eine Edge-Computing-Einheit und/oder eine Fog-Computing-Einheit. In einer bevorzugten Ausführung sind der Server, das Cloud-System, das Endgerät, die Edge-Computing-Einheit und/oder die Fog-Computing-Einheit loT-fähig.

In einer Ausführung sind die Graphdatenbank, die Datenverarbeitungseinheit, die Ausführungseinheit, die Datenerfassungseinheit, die Edge-Computing-Einheit, die Fog-Computing-Einheit und/oder die interaktive Mensch-Maschine Schnittstelle eingerichtet, Methoden der künstlichen Intelligenz (Kl), insbesondere des Maschinellen Lernens (ML) und/oder des tiefen Lernens (DL), anzuwenden und/oder Ergebnisse in Echtzeit bereitzustellen.

Das erfindungsgemäße Verfahren zum Betrieb einer Ausführungsform des erfindungsgemäßen Forschungs- und Entwicklungssystems kann einen oder mehrere der nachfolgenden Schritte a) bis k) umfassen. In einer bevorzugten Ausführungsform werden diese Schritte unter Verwendung von Methoden der Künstlichen Intelligenz und/oder in Echtzeit ausführt.

Abspeichern von Daten in einer Graphdatenbank gemäß eines Datenmodells, welches eine wohldefinierte Ontologie abbildet;
Vereinheitlichen, Ergänzen, und/oder Anreichern von in der Graphdatenbank gespeicherten Daten;
Identifizieren von statistischen und/oder kausalen Zusammenhängen zwischen in der Graphdatenbank gespeicherten Daten und/oder Modellieren dieser Zusammenhänge mittels statistischer Modelle und/oder physikalisch-chemischer Modelle;
Identifizieren von in den gespeicherten Daten enthaltenen Forschungs- und Entwicklungszielen und/oder Generieren von zur Erreichung der Forschungs- und Entwicklungsziele geeigneten Workflows und/oder Arbeitsschritten;
Auswählen eines Workflows zur Erreichung eines Entwicklungsziels in Abhängigkeit des Entwicklungsziels und/oder Auswählen eines Arbeitsschritts aus einer Menge von Arbeitsschritten eines ausgewählten Workflows, insbesondere in Abhängigkeit von einem vorausgegangenen Arbeitsschritt und/oder einem Ergebnis eines vorausgegangenen Arbeitsschritts;
Auswählen eines Endgeräts zur Durchführung eines Arbeitsschritts, insbesondere in Abhängigkeit der Art, des Umfangs und/oder des Zeitpunkts des durchzuführenden Arbeitsschritts und/oder der Art, des Umfangs, des Zeitpunkts und/oder dem Status der Erfüllung der Bedingungen der Verfügbarkeit des Endgeräts;
Analysieren eines Ergebnisses eines Arbeitsschritts durch eine Edge-Computing-Einheit und/oder eine Fog-Computing-Einheit und/oder Weiterleiten des Analyseergebnisses als Ergebnis des Arbeitsschritts;
Erfassen, Kennzeichnen bezüglich der Entstehung und Herkunft und/oder Speichern in der Graphdatenbank eines Ergebnisses eines Arbeitsschritts;
Lokalisieren, Erfassen und/oder Speichern in der Graphdatenbank von für ein Forschungsziel relevanten Informationen, insbesondere Fachartikel, Publikationen, Versuchsreihen, Vorträge, Kommentierungen und/oder sonstige relevante Aufzeichnungen und/oder Dokumentationen;
Lokalisieren, Erfassen und/oder Speichern in der Graphdatenbank von Informationen zu Art, Umfang, Zeitpunkt der Verfügbarkeit und/oder Nicht-Verfügbarkeit eines Endgeräts, zu technischen, administrativen, rechtlichen, vertraglichen und/oder sonstigen Bedingungen der Verfügbarkeit eines Endgeräts und/oder zum Status der Erfüllung der Bedingungen der Verfügbarkeit;
Graphisches Darstellen eines Ergebnisses eines Arbeitsschritts, mehrerer Arbeitsschritte eines Workflows, eines Workflows, eines Arbeitsschritts und/oder der Verfügbarkeit eines Endgeräts zur Durchführung eines Arbeitsschritts; und/oder Empfangen einer Auswahl eines menschlichen Nutzers eines durchzuführenden Workflows, Arbeitsschritts und/oder Endgerät zur Durchführung eines Arbeitsschritts.

Die erfindungsgemäße Methode und/oder einzelne Schritte der erfindungsgemäßen Methode können als Computer-Programmprodukt umgesetzt sein. Das Computer-Programmprodukt kann die Methode und/oder einzelne Schritte der Methode ausführen, wenn es durch eine geeignete Recheneinheit ausgeführt wird. Ein solches Computer-Programmprodukt kann auf einem Speichermedium gespeichert sein und/oder auf einer Recheneinheit, wie bspw. ein Server oder Cloud-System, installiert, gespeichert und/oder zum Download bereitgestellt sein.

### KURZE BESCHREIBUNG DER FIGUREN

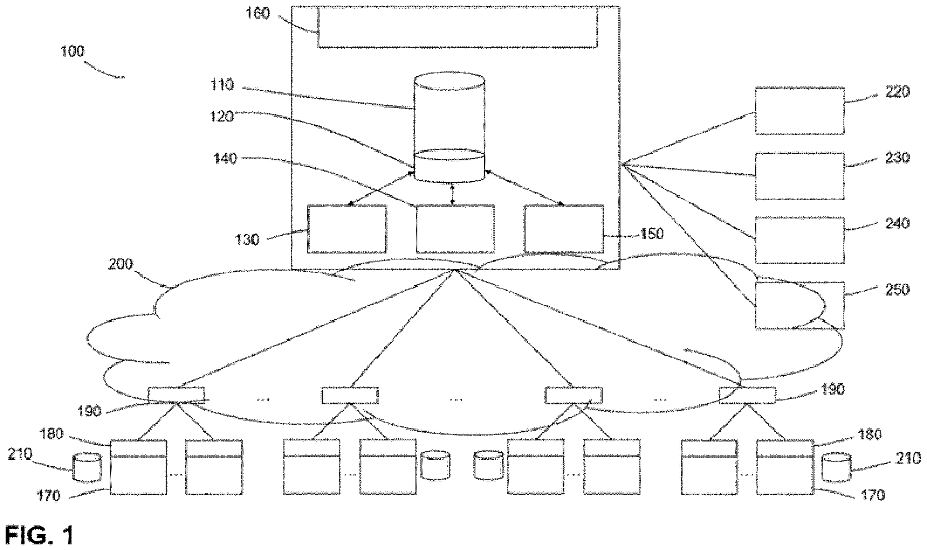

Zum besseren Verständnis der Merkmale und Vorteile der Erfindung werden nachfolgend einige Ausführungsformen der Erfindung unter Bezugnahme auf die beigefügten Figuren 1 bis 14 genauer beschrieben. Die Darstellungen der Figuren veranschaulichen jedoch nur einige Ausführungsformen und sind nicht als einschränkend zu betrachten, da es auch andere, ebenso wirksame Ausführungsformen geben kann.
Figur 1 zeigt einen schematischen Überblick einer Ausführung eines erfindungsgemäßen Forschungs- und Entwicklungssystems.
Figuren 2 und 3 zeigen ein Beispiel einer Abfolge von Schritten der erfindungsgemäßen Methode zur Konzeption, Initialisierung und fortlaufenden Nutzung eines erfindungsgemäßen Forschungs- und Entwicklungssystems.
Figur 4 zeigt eine vereinfachte Darstellung der Ontologie für Europäische Werkstoffmodellierung (EMMO).
Figur 5 zeigt ein vereinfachtes Beispiel einer erfindungsgemäßen Ontologie.
Figur 6 zeigt wesentliche Vorteile einer erfindungsgemäßen, bereichs- bzw. anwenderübergreifenden Ontologie.
Figur 7 zeigt wesentliche Bestandteile des Rahmenkonzepts zur Ressourcenbeschreibung RDF, welches in einer erfindungsgemäßen Ausführungsform, bspw. auf dem Gebiet der Integration von Materialien in Bauelemente für H₂-Technologien, verwendet werden kann.
Figur 8 zeigt ein Beispiel für eine Integration einer Graphdatenbank in eine erfindungsgemäßes Forschungs- und Entwicklungssystem mit Schwerpunkt auf der Dezentralisierung von Endgeräten und einer sehr heterogenen Datenstruktur mit komplexen Datenpipelines.
Figur 9 zeigt ein Beispiel für den erfindungsgemäßen Import von Rohdaten in Tabellenform, bspw. als .out-Datei.
Figur 10 zeigt ein Beispiel einer erfindungsgemäßen Darstellung von importierten Rohdaten als Graph.
Figur 11 zeigt ein Beispiel einer erfindungsgemäßen Top-Level-Visualisierung eines Fabrikationsprozesses auf Basis von Messdaten und Simulationsdaten.

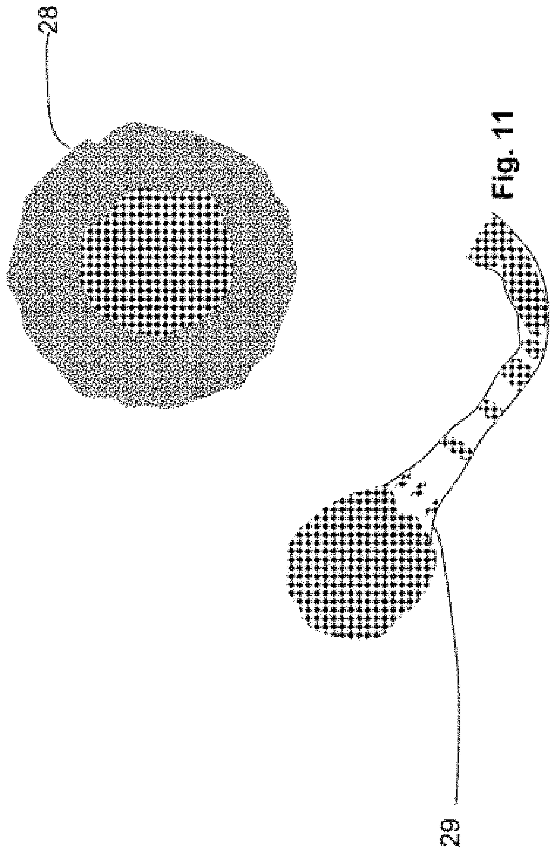

Figur 11 zeigt eine vereinfachte Darstellung einer erfindungsgemäßen Dateninfrastruktur und Vorgehen zum Trainieren von maschinellen Lernmodellen und deren Anwendung.

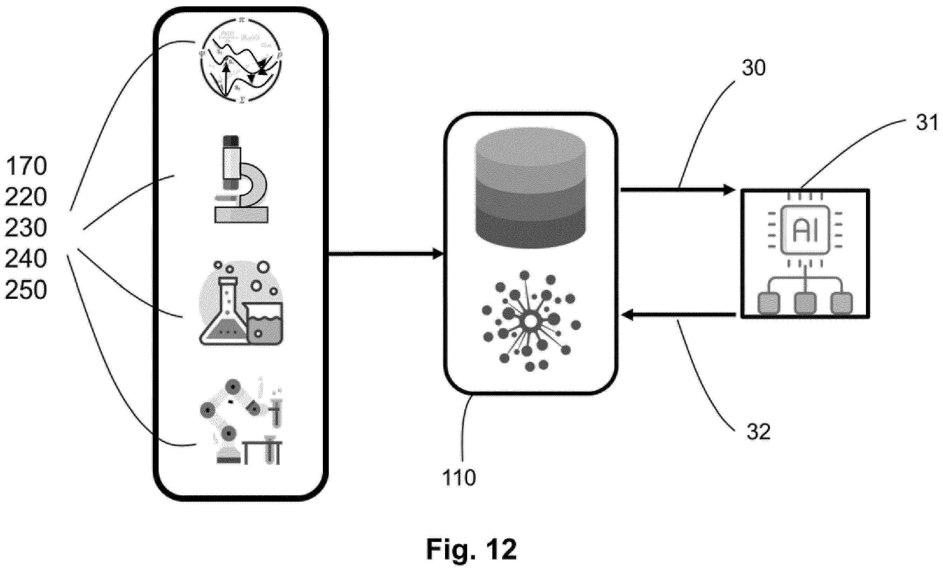

Figur 12 zeigt eine vereinfachte, schematische Darstellung eines Beispiels für ein erfindungsgemäßes.

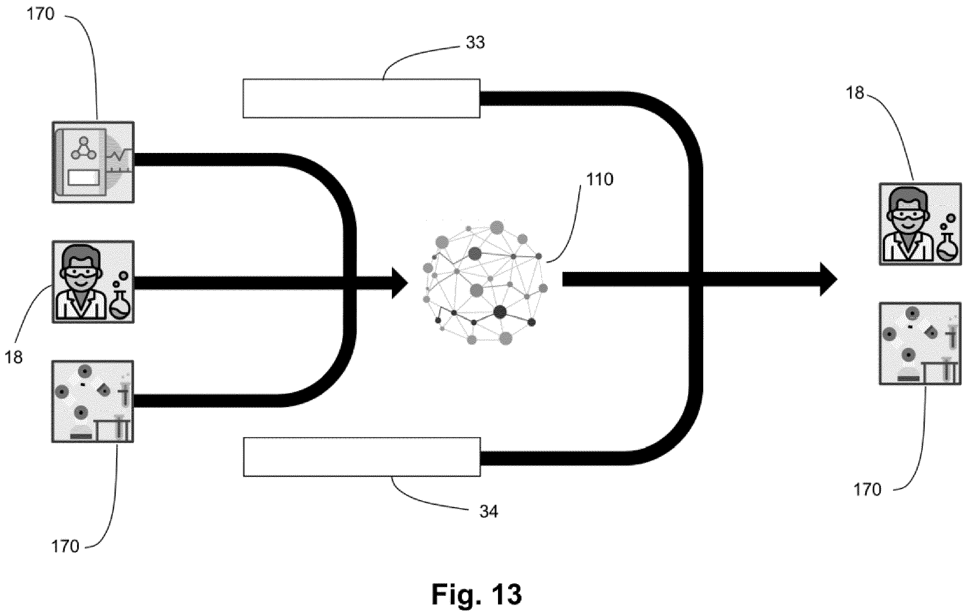

Figur 13 zeigt ein schematisches Beispiel zur erfindungsgemäßen Nutzung von statistischen und kausalen Modellen.

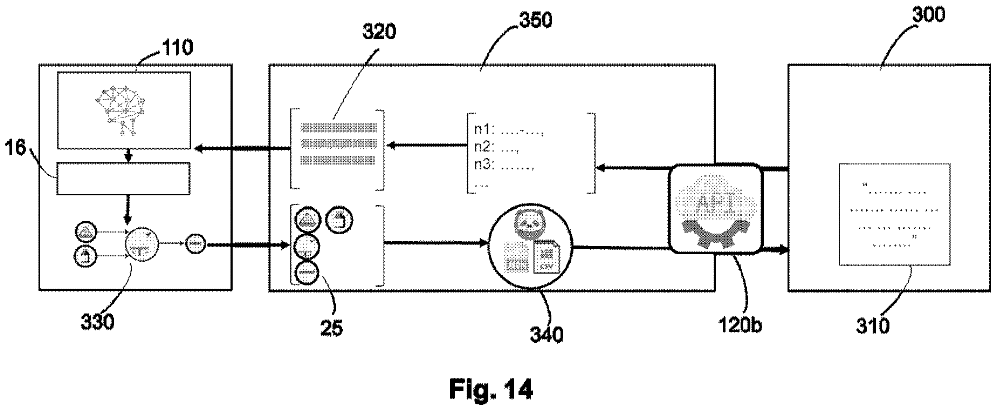

Figur 14 zeigt einen Ablauf und eine Architektur.

### AUSFÜHRLICHE BESCHREIBUNG

Heutige wissenschaftliche Forschung und Entwicklung (F&E), insbesondere im Bereich von Energiematerialien, erfordern einen hohen Aufwand und hochqualifiziertes Personal. Dabei sind die technischen und organisatorischen Infrastrukturen, insbesondere Systeme, Geräte und Prozesse, sehr heterogen, werden dezentral und ohne ausreichende Konnektivität verwaltet und betrieben und sind wenig standardisiert. Dies wirkt sich negativ auf die Effizienz und die Qualität von Forschung und Entwicklung aus.

Um diese Defizite zu lösen, wird ein verbessertes Forschungs- und Entwicklungssystem 100 zur Entwicklung von Produkten und Herstellungsverfahren von Produkten, insbesondere Energiematerialien bis hin zur Geräteintegration, vorgeschlagen. Dieses Forschungs- und Entwicklungssystem 100 hilft insbesondere, die Datenkonnektivität zwischen dezentralen Daten- und Endgerätknotenpunkten sicherzustellen und die Forschungs- und Entwicklungsprozesse zu optimieren.

Unter Forschung bzw. Entwicklung werden alle planvollen und/oder systematischen Aktivitäten auf der Basis wissenschaftlicher Methoden verstanden, deren Ziel der Erwerb neuen Wissens ist. Dabei ist "neu" in Bezug auf die jeweilige organisatorische Einheit zu verstehen, welche die Forschung bzw. die Entwicklung durchführt.

Ein Forschungs- und Entwicklungssystem bezeichnet ein System zur Unterstützung von Forschungs- und/oder Entwicklungsaktivitäten. Produkte bezeichnen Gegenstände, die eine materielle Komponente umfassen.

Das erfindungsgemäße Forschungs- und Entwicklungssystem 100 kann auch als Orchestrator bezeichnet werden. Ein Orchestrator bezeichnet eine hardwarebasierte und softwarebasierte Einheit zur automatisierten Verwaltung von Aufgaben auf einem oder mehreren Geräten. Ein Orchestrator kann die Durchführung von Aufgaben orchestrieren, d.h. in einem zusammenhängenden Workflow verbinden und/oder automatisieren, um ein vorgegebenes Ziel zu erreichen. Insbesondere kann dies beinhalten, den Zugriff auf Geräte bereitzustellen und die Durchführung von Aufgaben auf Geräten automatisiert zu starten, Kapazitäten zu buchen oder zuzuweisen, mit heterogenen Systemen zu arbeiten und/oder eine Bereitstellung an verschiedenen geografischen Standorten und bei verschiedenen Gerätebetreibern durchzuführen. Zudem kann eine Orchestrierung die Ausführung sonstiger Verwaltungs- und Kontrollfunktionen beinhalten, wie beispielsweise Berechtigungsüberwachung und/oder Richtliniendurchsetzung bei der Nutzung eines Geräts.

Eine Orchestrierung ist von einer bloßen Automatisierung zu unterscheiden. Automatisierung bezeichnet ein Teilbereich der Orchestrierung. Automatisierung konzentriert sich darauf, eine Aufgabe ohne oder mit minimalem manuellem Eingriff schnell wiederholbar zu machen. Orchestrierung ermöglicht die Koordination zwischen und über viele automatisierte Aktivitäten hinweg und bezieht die Umgebung mit ein.

Ein Workflow bezeichnet einen Arbeitsablauf, insbesondere zur Forschung und Entwicklung eines Produkts oder eines Herstellungsverfahrens, der aus einzelnen, zueinander parallelen und/oder sequentiellen Arbeitsschritten und/oder Aktivitäten aufgebaut ist. Der Arbeitsablauf beschreibt dabei die operationell-technische Sicht auf die durchzuführenden Arbeitsschritte und/oder Aktivitäten. Idealerweise erfolgt diese Beschreibung so exakt, dass der folgende Arbeitsschritt bzw. die folgende Aktivität durch den Ausgang des/der jeweils vorangehenden determiniert ist. Die einzelnen Arbeitsschritte bzw. Aktivitäten stehen demnach in Abhängigkeit zueinander. Ein Workflow umfasst eine Mehrzahl von zueinander in Beziehung stehenden Arbeitsschritten. Ein Workflow hat einen definierten Anfang, einen organisierten Ablauf und ein definiertes Ende. Workflows zeichnen sich durch einen koordinativen Charakter aus. Davon zu unterscheiden sind kooperative Systeme, bei denen die synchrone, strikt voneinander getrennte Ausführung von Schritten und/oder Aktivitäten im Vordergrund steht.

Ein Arbeitsschritt umfasst eine Aktivität oder Menge von Aktivitäten, welche auf die Erreichung eines vorgegebenen Forschungs- bzw. Entwicklungsziels gerichtet sind. Die Aktivitäten eines Arbeitsschritts und deren Durchführung lassen sich von anderen Aktivitäten sinnvoll trennen. Die Aktivitäten desselben Arbeitsschritts und deren Durchführung lassen sich jedoch aufgrund ihrer inneren Struktur und/oder aufgrund von Abhängigkeiten untereinander nicht oder nur schwer sinnvoll voneinander trennen. Arbeitsschritte können insbesondere Experimente, Versuche, Messungen Beobachtungen und/oder die mechanische, physikalische und/oder chemische Veränderung von materiellen Gegenständen und/oder Substanzen bzw. Materialien sein.

Energiematerialien umfassen insbesondere Materialien, welche für Technologien zur skalierbaren Energieumwandlung und/oder Energiespeicherung in oder aus elektrischer Energie wesentlich sind, z. B. für Brennstoffzellen, Wasser- oder CO₂-Elektrolyse, Photovoltaik und/oder wiederaufladbare Batterien bzw. Primärbatterien.

Figur 1 zeigt einen schematischen Überblick einer Ausführung eines erfindungsgemäßen Forschungs- und Entwicklungssystems 100. Es umfasst eine Datenbank 110 mit einer Schnittstelle 120 zur Eingabe und Ausgabe von Daten, eine Datenverarbeitungseinheit 130 und eine Ausführungseinheit 140. Dabei umfasst die Datenbank eine Graphdatenbank 110, die eingerichtet ist, Daten gemäß eines Datenmodells abzuspeichern, welches eine wohldefinierte Ontologie 16 abbildet. Ontologie bezeichnet einen festen Satz von Klassen, Regeln und Einschränkungen zur formalen Beschreibung von Wissen.

Datenverarbeitungseinheit bezeichnet eine Einheit zur elektronischen Auswertung und Verarbeitung von elektronisch gespeicherten Daten, insbesondere zur Erkennung von Zusammenhängen, Ähnlichkeiten, Mustern, Abhängigkeiten und/oder Redundanzen, der Klassifizierung, Zuordnung und/oder Ableitung von Modellen, Prognosen, Konzepten und Plänen.

Ausführungseinheit bezeichnet eine Einheit zur Auswahl und Durchführung eines Workflows, Arbeitsschritts und/oder Aktivität zur Erreichung eines Ziels sowie zur Auswahl und/oder Start eines Endgeräts 170, insbesondere eines Zeitpunkts, eines Orts und/oder einer organisatorischen Einheit zur Durchführung eines Workflows, Arbeitsschritts und/oder einer Aktivität.

Weiter kann das erfindungsgemäße Forschungs- und Entwicklungssystem 100 eine Datenerfassungseinheit 150 und/oder eine interaktive, bevorzugt graphische, Mensch-Maschine-Schnittstelle 160 umfassen. Die Datenerfassungseinheit 150 kann eingerichtet sein, für ein Forschungsziel und/oder Forschungsgebiet relevante Informationen, wie bspw. Fachartikel, Publikationen, Versuchsreihen, Vorträge, Kommentierungen und/oder Dokumentationen, zu lokalisieren, zu erfassen und/oder in der Graphdatenbank 110 zu speichern. Derartige Informationen können bspw. dezentral auf einem Publikationsserver 220, in einer Forschungsdatenbank 230 oder auf Webseiten 240 elektronisch gespeichert sein. Diese Informationen können bspw. mit Crawlern lokalisiert und ggf. mit Textmining-Verfahren ausgewertet und erfasst werden. Ebenso können Informationen nicht elektronisch vorliegen. Diese könne bspw. mit Scannern 250 elektronisch erfasst werden.

Interaktive Mensch-Maschine-Schnittstelle bezeichnet eine Ein-/Ausgabeeinheit, die es ermöglicht, Informationen, Daten und/oder Befehle zwischen einem menschlichen Nutzer und einem Datenverarbeitungssystem auszutauschen. Eine interaktive graphische Mensch-Maschine-Schnittstelle 160 bezeichnet die Ausgabe von Informationen und/oder die Möglichkeit zur Eingabe von Informationen, Daten und/oder Befehlen, welche an das menschliche Wahrnehmungsvermögen angepasst und/oder durch einen menschlichen Nutzer besonders schnell und einfach zu verstehen und/oder zu erlernen sind. Eine solche Schnittstelle kann ein Dashboard umfassen, also eine grafische Benutzeroberfläche, die der Visualisierung von Daten und/oder von Bedienungselementen dient.

Datenerfassungseinheit bezeichnet eine Einheit zur manuellen und/oder elektronischen automatisierten Identifizierung und/oder Erfassung von analogen und/oder elektronischen, strukturierten und/oder unstrukturierten Daten. Manuelle Erfassung kann bspw. die Eingabe durch einen menschlichen Nutzer per Tastatur, Stimme, Kamera oder Scanner umfassen. Automatisierte Erfassung bezeichnet dabei insbesondere eine Erfassung mittels Maschine-zu-Maschine-Kommunikation umfassen, bspw. mittels eines Crawlers oder einer Text-Mining-Einheit.

Als Crawler werden (Software-)Programme bezeichnet, die auch Bots oder Spider genannt werden. Diese durchsuchen automatisiert Kommunikationsnetze, insbesondere das Internet. Dazu arbeitet ein Crawler vordefinierte Aufgaben sukzessive ab, bspw. eine Anzahl von Adressen im Netz, die besucht werden sollen. An der Adresse gespeicherte Inhalte werden durchsucht und bspw. auf das Vorhandensein vordefinierter, relevanter Inhalte geprüft und/oder zum Speichern in eine Datenbank kopiert. Ebenso kann ein Crawler an einer Adresse gefundenen Verweisen auf andere Adressen folgen, um die Suche nach relevanten Inhalten fortzusetzen bzw. zu erweitern.

Text-Mining bezeichnet Algorithmus-basierte Analyseverfahren zur Entdeckung von Bedeutungsstrukturen aus unstrukturierten und/oder schwachstrukturierten Textdaten. Text-Mining geht üblicherweise in mehreren Schritten vor. Zunächst wird geeignetes Datenmaterial gesammelt, bspw. mit Hilfe eines auf relevante Themen spezialisierten Crawlers. In einem zweiten Schritt werden diese Daten so aufbereitet, bspw. einschließlich automatischer und/oder optischer Texterkennung bzw. Zeichenerkennung, dass sie im Folgenden mittels Text-Mining-Verfahren analysiert werden können. Text-Mining-Verfahren bezeichnen statistische und linguistische Mittel, die es erlauben, aus Texten Strukturen und Daten zu erschließen, die, im Idealfall automatisiert, erfasst und in einer Datenbank gespeichert werden können. Zumindest sollen Text-Mining-Verfahren einen menschlichen Nutzer jedoch in die Lage versetzen, Kerninformationen der verarbeiteten Texte schnell zu erkennen. Im Optimalfall liefern Text-Mining-Verfahren Informationen, von denen menschliche Nutzer zuvor nicht wissen, ob und dass sie in den verarbeiteten Texten enthalten sind. Bei zielgerichteter Anwendung sind Werkzeuge des Text-Minings außerdem in der Lage, Hypothesen zu generieren, diese zu überprüfen und schrittweise zu verfeinern.

Das Forschungs- und Entwicklungssystems 100 kann ein Endgerät 170 zur Ausführung einer Forschungsaktivität umfassen. Das Endgerät 170 kann kommunikativ mit der Datenbank 110 bzw. der Schnittstelle 120, der Ausführungseinheit 140 und/oder Datenerfassungseinheit 150 verbunden sein. Die kommunikative Anbindung 200 kann bspw. über das Internet und/oder über ein spezialisiertes, nicht-öffentliches Kommunikationsnetz für Sprache und/oder Daten erfolgen.

Endgerät bezeichnet dabei ein System, Instrument, Computer, sonstiges Gerät und ein auf einem Endgerät ausgeführtes Verfahren zur Durchführung eines Arbeitsschritts oder einer Aktivität. Ein Endgerät 170 kann bspw. ein Hochleistungsrechner, ein selbststeuerndes Labor (SDL; engl. "Self-Driven Labs"), ein Hochdurchsatz-Screening (HTS; engl. "High Throughput Screening"), ein Potentiometer, ein Porosimeter, ein Viskosimeter, ein bildgebendes Verfahren, ein mathematisches, numerisches oder theoretisches Analysemodell, oder ein rechnerisches und atomistisch-meso-skaliges Simulationsverfahren sein. Endgeräte erzeugen eine enorme Menge von Daten, wie z.B. Simulations- und Berechnungsdaten, Bildgebungsdaten der Transmissionselektronenmikroskopie (TEM; engl. "Transmission Electron Microscopy"), Bildgebungsdaten der Rasterelektronenmikroskopie (SEM; engl. "Scanning Electron Microscopy"), elektroanalytische Messdaten wie Impedanz, Leistungskurven und jede andere Form von Strom-Spannungs- oder Materialcharakterisierungsdaten.

In einer Ausführung kann die Datenerfassungseinheit 150 eingerichtet sein, ein Ergebnis einer Durchführung eines Arbeitsschritts durch ein Endgerät 170 zu erfassen, das Ergebnis bezüglich seiner Entstehung und Herkunft zu kennzeichnen und/oder in der Graphdatenbank 110 zu speichern. Zur Reduzierung der zu kommunizierenden Daten kann das Forschungs- und Entwicklungssystem 100 eine Edge-Computing-Einheit 180 und/oder eine Fog-Computing-Einheit 190 umfassen.

Ein Edge-System bzw. ein Fog-System bezeichnen Zwischenschichten zwischen einem Kernrechenzentrum, insbesondere einem Server oder einem Cloud-Computing-System, und über eine Netzinfrastruktur verbundene Endgeräte 170. Diese Zwischenschichten umfassen Analyseeinheiten, sogenannte Edge-Computing-Einheiten 180 bzw. Fog-Computing-Einheiten 190, welche sich bei oder nahe bei den jeweiligen Endgeräten 170 befinden. In der Regel befinden sich Fog-Computing-Einheiten 190 zwischen den Edge-Computing-Einheiten 180 und den zentralen Einheiten. Diese Edge/Fog-Computing-Einheiten 180, 190 analysieren die große Menge an Rohdaten der Endgeräte 170 und leiten nur noch die daraus abgeleiteten Ergebnisse bzw. Erkenntnisse an das Kernrechenzentrum, bspw. den Server oder die Cloud, weiter. Die ursprünglichen Rohdaten werden verworfen. Ein Edge/Fog-System verschiebt somit die Datenverarbeitung an den "Rand", die Edge bzw. "zwischen den Rand und der Cloud liegenden Nebel", des Netzwerks und hilft so, die Latenzzeiten zu minimieren und die Entstehung von Engpässen bei der Datenübermittlung im Netz zu verhindern.

Weiter kann die Datenerfassungseinheit 150 eingerichtet sein, Informationen zu Art, Umfang oder Zeitpunkt der Verfügbarkeit bzw. Nicht-Verfügbarkeit eines Endgeräts 170 oder einer sonstigen, relevanten Ressource zu lokalisieren, zu erfassen und/oder in der Graphdatenbank 110 zu speichern. Zudem kann die Datenerfassungseinheit 150 eingerichtet sein, Informationen zu technischen, administrativen, rechtlichen, vertraglichen und/oder sonstigen Bedingungen der Verfügbarkeit und/oder zum Status der Erfüllung der Bedingungen der Verfügbarkeit eines Endgeräts 170 oder sonstigen Ressource zu lokalisieren, zu erfassen und/oder in der Graphdatenbank 110 zu speichern. Solche Informationen können insbesondere in dezentralen Forschungseinrichtungen, bspw. in lokalen File-Systemen oder Datenbanken 210, abgespeichert sein.

Die Datenverarbeitungseinheit 130 kann eingerichtet sein, die in der Graphdatenbank 110 gespeicherten Daten zu ergänzen, zu vereinheitlichen und/oder anzureichern. Weiter kann die Datenverarbeitungseinheit 130 eingerichtet sein, statistische oder kausale Zusammenhänge zwischen den Daten in der Datenbank 110 zu identifizieren und diese Zusammenhänge mittels statistischer Modelle und physikalisch-chemischer Modelle zu modellieren. Zudem kann die Datenverarbeitungseinheit 130 eingerichtet sein, in den gespeicherten Daten Forschungs- und Entwicklungsziele zu identifizieren, sowie auf Basis der identifizierten Ziele und Zusammenhänge zwischen den Daten, geeignete Workflows und/oder Arbeitsschritte zu Zielerreichung zu generieren bzw. bestehende Workflows und/oder Arbeitsschritte aufgrund zusätzlicher Daten anzupassen.

Die Ausführungseinheit 140 kann eingerichtet sein, einen Workflow zur Erreichung eines Entwicklungsziels und/oder einen nächsten Arbeitsschritt eines Workflows auszuwählen. Die Auswahl kann insbesondere in Abhängigkeit eines Entwicklungsziels oder eines vorausgegangenen Arbeitsschritts bzw. dessen Ergebnis erfolgen.

Weiter kann die Ausführungseinheit 140 eingerichtet sein, ein Endgerät 170 zur Durchführung eines Arbeitsschritts oder Aktivität auszuwählen. Die Auswahl kann in Abhängigkeit der Art, des Umfangs und/oder des Zeitpunkts des durchzuführenden Arbeitsschritts / Aktivität sowie der Art, des Umfangs, des Zeitpunkts oder dem Status der Erfüllung der Bedingungen der Verfügbarkeit des Endgeräts 170 erfolgen.

Die interaktive Mensch-Maschine-Schnittstelle 160 kann eingerichtet sein, einen Arbeitsschritt bzw. Arbeitsschritte eines Workflows bzw. deren Ergebnisse graphisch darzustellen. Ebenso kann die Schnittstelle 160 eingerichtet sein, die Verfügbarkeit eines Endgeräts 170 bzw. einer sonstigen, relevanten Ressource darzustellen. Die interaktive Mensch-Maschine-Schnittstelle 160 kann weiter eingerichtet sein, eine Eingabe eines menschlichen Nutzers zur Auswahl eines Forschungsziels, eines durchzuführenden Workflows, Arbeitsschritts oder Endgeräts 170 zur Durchführung eines Arbeitsschritts oder Aktivität zu empfangen.

In einer Ausführung können die vom erfindungsgemäßen Forschungs- und Entwicklungssystems 100 umfassten Einheiten, Geräte und Systeme loT-fähig sein. Zudem können die Einheiten, Geräte und Systeme eingerichtet sein, Ergebnisse in Echtzeit bereitzustellen bzw. zu kommunizieren sowie Methoden der künstlichen Intelligenz (Kl), insbesondere des Maschinellen Lernens (ML) und/oder des tiefen Lernens (DL), auszuführen.

IoT steht für den englischen Begriff "Internet of Things", auf Deutsch Internet der Dinge". Das "Internet der Dinge" bezeichnet die Verknüpfung eindeutig identifizierbarer physischer Objekte (engl. "things") mit einer elektronischen Schnittstelle und virtuellen Repräsentation in einer (globalen) Internet-ähnlichen Infrastruktur. Diese umfasst für die Maschine-zu-Maschine-Kommunikation optimierte Kommunikationsprotokolle. Dies ermöglicht, neben einer Mensch-zu-Mensch, auch eine Mensch-zu-Objekt und eine Objekt-zu-Objekt Kommunikation. Die Objekte des Internets der Dinge erhalten damit die Möglichkeit, sich untereinander selbst zu organisieren, Informationen auszutauschen und zu interagieren. Ein menschliches Eingreifen bleibt dabei grundsätzlich möglich, ist aber nicht mehr zwingend erforderlich.

Künstliche Intelligenz KI (engl. "Artificial Intelligence", AI) meint die Eigenschaft eines technischen Systems, menschenähnliche, intelligente Fähigkeiten zu zeigen, wie beispielsweise logisches Denken, Lernen, Planen, Kreativität, Sehen, Hören und/oder Verstehen.

Maschinelles Lernen (ML; engl. "Machine Learning") meint die Fähigkeit eines technischen Systems zur Generierung von Wissen aus Erfahrung. Dabei bezeichnet tiefes Lernen (DL; engl. "Deep Learning") eine Methode des maschinellen Lernens, die künstliche neuronale Netze (KNN) mit zahlreichen Zwischenschichten (engl. "hidden layers") zwischen Eingabeschicht und Ausgabeschicht einsetzt und eine umfangreiche innere Struktur herausbildet. Ein solches künstliches System lernt aus Beispielen und kann diese nach Beendigung einer Lernphase verallgemeinern. Dabei können unterschiedliche Methoden eingesetzt werden, bspw. überwachtes Lernen, unüberwachtes Lernen, bestärkendes Lernen und tiefes/mehrschichtiges Lernen.

Dabei bezeichnet Echtzeit einen Betrieb, bei dem die Verarbeitungsergebnisse innerhalb einer vorgegebenen, insbesondere garantierten Zeitspanne verfügbar sind, insbesondere bei dem die Datenverarbeitung bzw. die Kommunikation nahezu simultan, bevorzugt simultan, mit entsprechenden Vorgängen in der Realität ablaufen.

Ferner kann das Forschungs- und Entwicklungssystem 100 einen Server und/oder Cloud-System umfassen. Insbesondere können die Datenbank 110, die Datenverarbeitungseinheit 130, die Ausführungseinheit 140 und die Datenerfassungseinheit 150 auf einem (zentralen) Server und/oder in einem Cloud-System installiert und betrieben werden.

Ein Server bezeichnet eine Recheneinheit, die für andere in einem Netzwerk mit ihm verbundene Systeme bestimmte Aufgaben übernimmt und von dem diese ganz oder teilweise abhängig sein können. Ein Server hilft, insbesondere eine Mehrzahl von Geräten, insbesondere auch unterschiedliche Geräte und/oder Geräte an unterschiedlichen geographischen Standorten, in das Forschungs- und Entwicklungssystem verbessert einzubinden, zu verwalten und zu steuern.

Ein Cloud-Computing-System, bezeichnet ein System, das nach dem Cloud-Computing Modell aufgebaut ist. Cloud Computing, auf Deutsch Rechnerwolke oder Datenwolke, beschreibt ein Modell, das bei Bedarf, insbesondere über das Internet und geräteunabhängig, zeitnah und mit wenig Aufwand geteilte Computerressourcen als Dienstleistung, etwa in Form von Servern, Datenspeicher und/oder Applikationen (App; Anwendungen), bereitstellt und nach Nutzung abrechnet. Angebot und Nutzung dieser Computerressourcen ist definiert und erfolgt in der Regel über eine Programmierschnittstelle (API; engl. "Application Programming Interface") bzw. für Anwender über eine Website oder App. Kennzeichnende Merkmale eines Cloud-Computing-Systems sind bspw. bei Bedarf abrufbare Selbstbedienung, ein breiter auf Standards basierender Netzzugang für unterschiedliche Geräte, die Bündelung von Ressourcen, eine schnelle, bedarfsgerechte Elastizität und fortlaufende Leistungsmessung zur Optimierung und Steuerung des Cloud-Systems.

So ermöglicht das erfindungsgemäße Forschungs- und Entwicklungssystem 100 insbesondere eine Vernetzung, Koordination und Interaktion von verschiedenen Endgeräten 170 und Akteuren. Daraus resultiert insbesondere eine schnelle Abrufbarkeit, schnelle Verfügbarkeit und Rückverfolgbarkeit der Ergebnisdaten und somit ein verbessertes F&E-Management von dezentralen, heterogenen F&E-Einheiten.

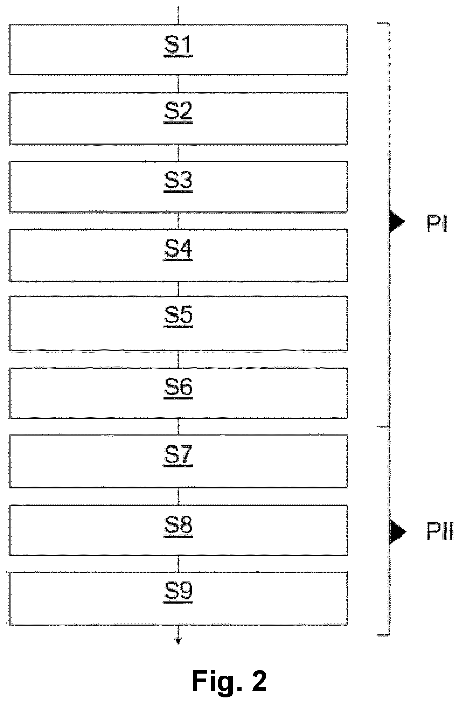

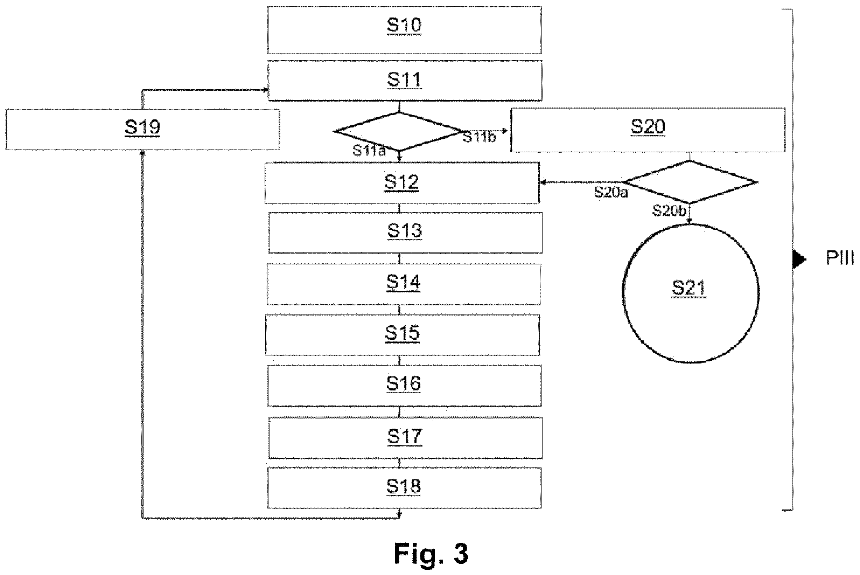

Zum besseren Verständnis der Merkmale und Vorteile der erfindungsgemäßen Methode wird in den Figuren 2 und 3 ein Beispiel einer Abfolge von Schritten der erfindungsgemäßen Methode zur Konzeption, Initialisierung und fortlaufenden Nutzung eines erfindungsgemäßen Forschungs- und Entwicklungssystems 100 zur Unterstützung von Forschungs- und Entwicklungsvorhaben dargestellt. Die dargestellten Schritte und Abfolgen stellen nur eine beispielhafte Ausführungsform der erfindungsgemäßen Methode dar und sind nicht einschränkend zu verstehen.

Die Schritte S1 bis S9 in der Figur 2 haben folgende Bedeutung:
S1: Definieren von Ontologie und Datenmodell;
S2: Konzipieren der Graphdatenbank;
S3: Lokalisieren und Erfassen von für ein Forschungsgebiet bzw. Forschungsziel relevanten Informationen und Daten;
S4: Importieren / Speichern der erfassten Informationen in Graphdatenbank gemäß Struktur der Schnittstellen bzw. des Datenmodells;
S5: Erstellen eines Trainingsdatensatzes; Trainieren eines Modells zur Vervollständigung, Vereinheitlichung; Anreicherung der Daten;
S6: Vervollständigen, Vereinheitlichen, Anreichern der Daten in Graphdatenbank mittels (KI-)Modellen;
S7: Identifizieren von Zusammenhängen; Erstellen statistischer Datenmodelle; Zuordnen von physikalisch-chemischen Modellen;
S8: Identifizieren von Forschungszielen in Daten; Generieren von Arbeitsschritten und Workflows zur Erreichung von Forschungszielen;
S9: Lokalisieren und Erfassen von Informationen zur Verfügbarkeit von Endgeräten, Instrumenten, Systemen und/oder sonstigen Ressourcen;
wobei PI: Phase I und PII: Phase II.

Die Schritte S10 bis S21 in der Figur 3 haben folgende Bedeutung:
S10: Auswählen eines Forschungsziels; Auswählen eines Workflows zur Erreichung des Forschungsziels;
S11: Bestimmen eines nächsten Arbeitsschritts aus Workflow;
S11a, S11b: War der Schritt aus S11 erfolgreich? - falls ja, dann weiter mit S11a; wenn nein, dann weiter mit S11b;
S12: Auswählen / Starten eines Endgeräts zur Durchführung eines Arbeitsschritts / einer Aktivität; gegebenenfalls Kennzeichnung zur Rückverfolgung;
S13: Durchführen des Arbeitsschritts / der Aktivität durch Endgerät; Senden des Ergebnisses an Edge-Einheit;
S14: Auswerten von Rohdaten des Endgeräts; Senden des Ergebnisses an Fog-Einheit;
S15: Auswerten der Ergebnisse von Edge-Einheit; Senden des Ergebnisses an Erfassungseinheit;
S16: Erfassen und Speichern der Ergebnisse eines Arbeitsschritts / einer Aktivität; gegebenenfalls Kennzeichnung zur Rückverfolgung;
S17: Gegebenenfalls Vervollständigen, Vereinheitlichen, Anreichern der Ergebnisdaten (siehe S6);
S18: Charakterisieren der Ergebnisdaten (siehe S7): Erstellen / Zuordnen statistischer Datenmodelle; Zuordnen von physikalisch-chemischen Modellen;
S19: Generieren / Anpassen eines neuen Arbeitsschritts und/oder Workflows zur Erreichung des Forschungsziels (siehe S8);
S20: Manuelles Eingreifen zur Generierung / Auswahl eines nächsten Arbeitsschritts;
S20a / S20b: War der Schritt aus S20 erfolgreich? - falls ja, dann weiter mit S20a; wenn nein, dann weiter mit S20b;
S21: Forschungsziel erreicht? Beendigung bzw. Abbruch;
wobei PIII: Phase III.

### Erfassungseinheit

Bei heutigen Vorgehensweisen zur Forschung und Entwicklung können regelmäßig drei Phasen unterschieden werden. In einer ersten Phase sind für das jeweilige Thema bzw. Ziel relevante Datenquellen ausfindig zu machen, Artikel zu sichten sowie Daten zu sammeln und zu konsolidieren (siehe Figur 2, Phase I). Allein diese erste Phase kann mehrere Tage oder mehrere Wochen dauern. In einer zweiten Phase, Phase II, nach der Datenerfassung und Aufbereitung, werden die Daten in Absprache mit dem jeweiligen F&E-Team bzw. Experten analysiert, eine Zusammenfassung des Wettbewerbsvergleichs erstellt und über Handlungsschritte entschieden. Erst in einer nachfolgenden dritten Phase, Phase III, beginnt die praktische Forschung- und Entwicklungsarbeit. Ziele dieser praktischen Forschungs- und Entwicklungsarbeit können insbesondere die Herstellung von neuen Substanzen, Materialien und Prototypen sein. Zu deren Erreichung ist in der Regel die Durchführung von Experimenten, Messungen, und Simulationen sowie die Analyse, Modellierung und Validierung der beobachteten Ergebnisse und Zusammenhänge erforderlich.

Diese praktische Forschung- und Entwicklungsarbeit der dritten Phase, Phase III, erfordert Zugang zu hochspezialisierten Instrumenten und Geräten, welche austauschbar hier auch als Endgeräte bezeichnet werden. Diese befinden sich häufig in verschiedenen Einrichtungen, sowohl innerhalb als auch außerhalb einer forschenden Organisation. Somit müssen Verträge abgeschlossen und Arbeitsabläufe für Proben und Ergebnisse abgestimmt werden. Dies geschieht in der Regel manuell und in Einzelgesprächen mit den einzelnen Einrichtungen. Dieser Prozess ist ineffizient und mit zahlreichen Unsicherheiten behaftet, bspw. aufgrund von Unterschieden in den Testprotokollen, Integrität der Instrumente und/oder unterschiedlichen Fähigkeiten und Vorgehensweisen der durchführenden Personen. Bereits dies führt zu einem hohen Maß an Variabilität.

Insbesondere wenn bereichsübergreifende, organisationsübergreifende und/oder standortübergreifende Forschungs- und Entwicklungseinrichtungen beteiligt sind, sind die erzeugten Daten oftmals sehr heterogen. Beispielsweise erzeugen unterschiedliche Anwendungssysteme bzw. Anwender sehr unterschiedliche Datentypen, bspw. Daten von Experimenten, Simulationsdaten oder Daten aus der wissenschaftlichen Literatur, wie bspw. Zeitschriften, Konferenzen, Blogs und Online-Datenbanken. Auch verwenden unterschiedliche Bereiche und Unterbereiche ihr eigenes spezialisiertes Vokabular. Das jeweilige spezialisierte Vokabular unterscheidet sich zumindest leicht oder teilweise vom Vokabular und/oder der Semantik anderer Bereiche bzw. Unterbereiche. Ebenso wird je nach Bereich, Unterbereich bzw. Datenquelle eine Vielzahl unterschiedlicher Maßeinheiten und/oder Referenzpunkte verwendet.

Weiter können die Daten und deren Datenformate, Klassifikationen und Wertebereiche sich auf unterschiedliche Analyse- bzw. Abstraktionsebenen beziehen, bspw. auf die Makro-, Meso- und Mikroebene. Makro-, Meso-, Mikroebene bezeichnen unterschiedliche Analyse- bzw. Abstraktionsebenen. Auf der Makroebene werden große Aggregate bzw. Systeme untersucht. Auf der Mesoebene stehen Teile und Komponenten dieser Aggregate bzw. Systeme im Fokus. Auf der Mikroebene werden Einzelelemente bzw. die Interaktionen zwischen Einzelelementen betrachtet.

Zudem erfolgt auch das Datenmanagement, d.h. die Aufbereitung und Verwaltung von Forschungsdaten und Forschungsergebnissen aus verschiedenen Quellen, auf uneinheitliche, nicht standardisierte Weise. Selten entspricht die Qualität des Datenmanagements den Anforderungen einer professionellen Organisation mit wohldefinierten, standardisierten und vergleichbaren Datenstrukturen und Formaten. Eine Verwendung in einem laufenden Forschungsvorhaben von Ergebnissen anderer Einheiten sowie die Wiederverwendung von Ergebnissen vorhergehender Forschungen durch andere Bereiche, auf verwandten Gebieten oder im Rahmen von nachfolgenden Forschungsvorhaben wird hierdurch zusätzlich erschwert und in der Praxis oftmals unmöglich.

Um diese sehr großen, sehr heterogenen Datenmengen in den Vorbereitungsphasen eines Forschungsvorhabens, Phase I und Phase II, genauso wie während der Durchführung der praktischen Forschungsarbeiten, Phase III, effizient und effektiv nutzen zu können, werden die Daten erfindungsgemäß in einer gemeinsamen Datenbank 110 in einer geeigneten, vereinheitlichten Datenstruktur und einem geeigneten, gemeinsamen Datenmodell abgespeichert.

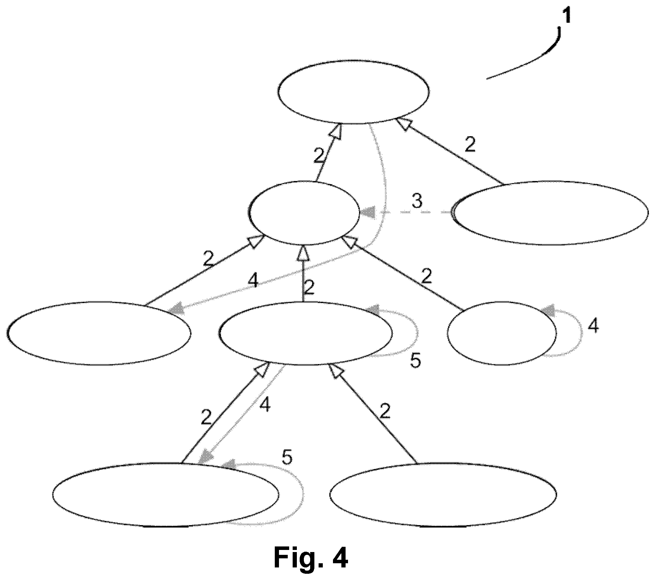

Um dies zu ermöglichen, wird, wie in Figur 2 dargestellt, in einem ersten Schritt S1 eine wohldefinierten Ontologie 16 ausgewählt bzw. definiert und darauf basierend das Datenmodell der erfindungsgemäßen Datenbank 110 definiert. In einer Ausführungsform kann bspw. dazu die in Figur 4 gezeigte Europäische Ontologie der Werkstoffmodellierung EMMO des Europäischen Rats für Materialmodellierung EMMC verwendet werden.

Die in Figur 4 dargestellte Ontologie 16 EMMO 1 umfasst Klassen mit Attributen und Beziehungen, welche eine Richtung haben können. Beispiele für Arten von Beziehungen sind 'istEin' 2, 'hatMitglied' 3, 'hatTeil' 4, 'hatZeitlichTeil' 5 (engl. "isA, hasMember, hasPart, hasTemporalPart"). Zu den Klassen und Beziehungen können weitere Regeln und Einschränkungen eingeführt werden. Ein Beispiel für eine Beziehung ist <Sammlung-Klasse> '- hat eine Beziehung mit →' <Element-Klasse> (engl. "Collection-Class", "Item-Class"). Ein Beispiel einer Regel bzw. Einschränkung ist, dass jede Instanz einer <Sammlung-Klasse> mindestens zwei 'hatMitglied'-Beziehungen zu verschiedenen Instanzen der <Item-Klasse> haben muss.

Instanzen bezeichnen konkrete Objekte einer Ontologie. Sie werden mittels vorher definierter Klassen erzeugt, z. B. wären 'Berlin', 'London', 'Paris', 'Rom' verschiedene Instanzen vom 'Typ Stadt' einer Klasse ,Topologischer Ort'.

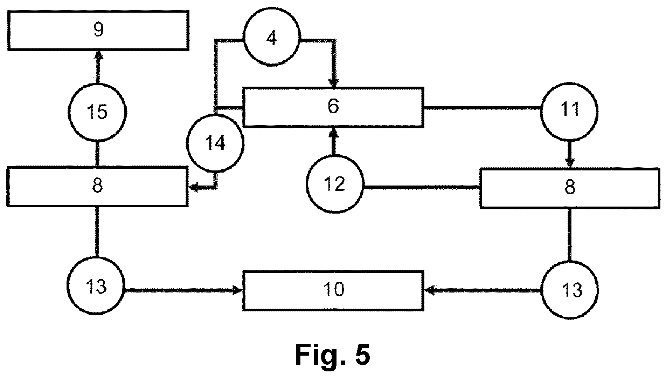

Figur 5 zeigt eine Ausführung einer erfindungsgemäßen Ontologie 16. Die Klassen und Eigenschaften der in Figur 5 gezeigten Ausführungsform einer erfindungsgemäßen Ontologie 16 fußen dabei auf dem grundsätzlichen Ansatz und Rahmenkonzept der Europäischen Ontologie der Werkstoffmodellierung EMMO 1. Eine solche erfindungsgemäße Ontologie 16 kann auf verschiedene bzw. verwandte F&E-Bereiche erweitert werden und ermöglicht insbesondere die Interoperabilität mit anderen EMMObasierten Plattformen. In der in Figur 5 dargestellten Ausführung umfasst die erfindungsgemäße Ontologie 16 die Objekte "Materie / Material / Komponente" 6, "Prozess" 7, "Messung" 8, "Eigenschaft" 9 und "Metadaten" 10 sowie die Eigenschaften "verarbeitet" 11, "stellt her" 12, "hat Teilnehmer" 13, "hat Teil" 4, "gemessen" 14, "erhaltene Menge" 15.

Dabei werden Klassen und Klasseneigenschaften in Klassenhierarchien verzweigt, um die spezifischen Materialien, Komponenten, Eigenschaften und Prozesse eines F&E-Bereichs zu beschreiben. Diese spezialisierten Hierarchien werden durch ebenfalls bereichsspezifische Regeln und Einschränkungen weiter verfeinert. Dies ermöglicht, ein belastbares, leistungsfähiges Rahmenkonzept zur formalisierten, strukturierten Darstellung und Speicherung von Wissen bereitzustellen.

Eine solche Ontologie 16 kann zur Konzeption des Datenmodells einer erfindungsgemäßen Datenbank 110 verwendet werden. In einem solchen Fall ermöglicht die Ontologie 16, die Eigenschaften des Datenmodells und somit auch die Struktur der Schnittstellen 120 zu definieren. Somit hilft die Ontologie 16, eine erfindungsgemäße Datenbank 110 zu konzipieren, welche klar definierte Ein-/Ausgabeschnittstellen 120 auf der Anwendungsebene bereitstellt und so eine effiziente Datenspeicherung und einen effizienten Datenzugriff auf ansonsten heterogene Anwendungsdaten ermöglicht.

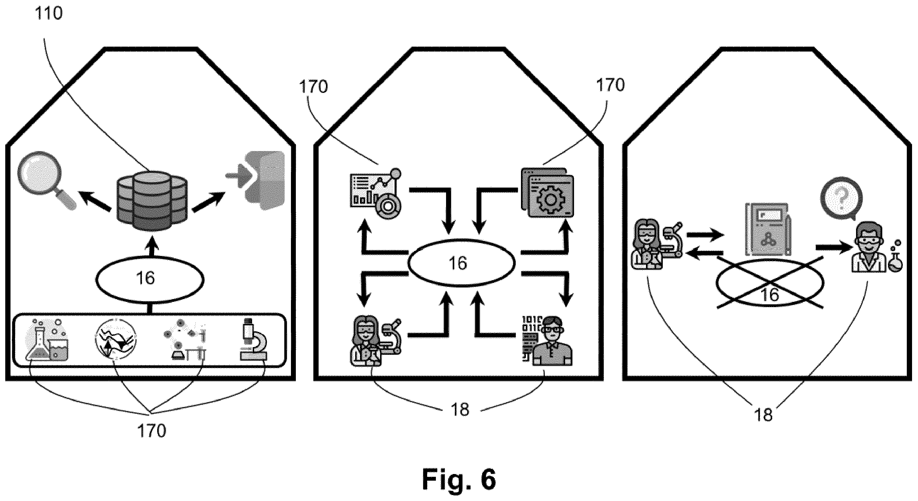

Die wichtigsten Vorteile der erfindungsgemäßen Nutzung bzw. Bereitstellung der Daten in einer gemeinsamen Ontologie 16 sind in Figur 6 dargestellt. Insbesondere erlaubt die Verwendung einer gemeinsamen, wohldefinierten Ontologie 16, Daten aus unterschiedlichen Datenquellen 170, 220, 230, 240, 250 aufzufinden und auf diese zuzugreifen. Ebenso werden der Austausch und Weiterverwendung von Daten zwischen verschiedenen F&E-Einheiten 18 möglich. Ebenso können einmal erarbeitete Ergebnisse und erzeugte Daten im Rahmen weiterer F&E-Projekte oder nachfolgender Schritte wiederverwendet werden. Wohingegen Ergebnisse und Daten in der Regel nicht objektiv interpretiert und verstanden werden können, wenn eine solche einheitliche Ontologie 16 fehlt. In diesem Fall sind Ergebnisse und Daten letztendlich als jeweils subjektive Daten mit geringem Nutzen für das Erreichen von Forschungs- und Entwicklungszielen zu werten.

Ein Datenmodell, das für eine erfindungsgemäße Ontologie 16 und Graphdatenbank 110 geeignet ist, kann bspw. nach dem Rahmenkonzept zur Ressourcenbeschreibung RDF (engl. "Resource Description Framework") zur Standardisierung von Datenmodellen aufgebaut werden. Ein nach diesem Rahmenkonzept aufgebautes Datenmodell für eine Graphdatenbank ist insbesondere geeignet, Informationen zwischen unterschiedlichen Anwendungen austauschbar und von Maschinen lesbar zu machen.

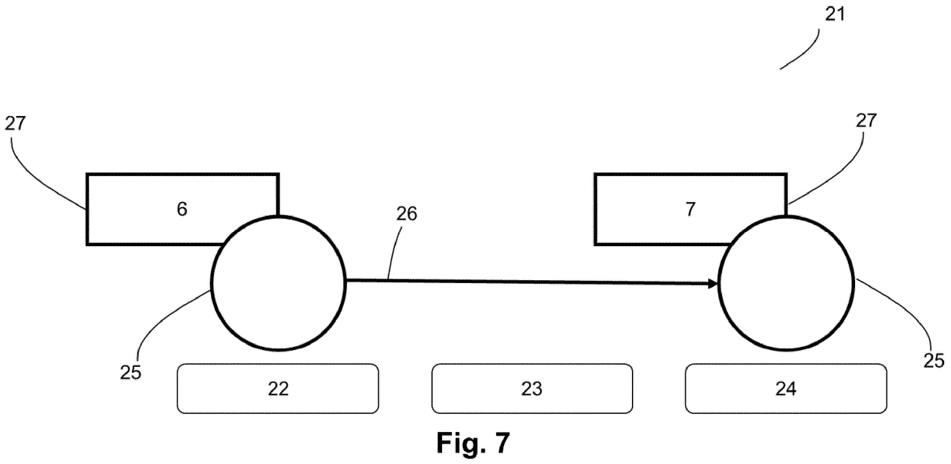

Wie in Figur 7 dargestellt, ist eine nach dem Rahmenkonzept zur Ressourcenbeschreibung RDF konzipierte Graphdatenbank mit Hilfe von sogenannten RDF-Ausdrücken 21 aufgebaut. Ein RDF-Ausdruck 21 ist ein Tripel bestehend aus Subjekt 22, Prädikat 23 und Objekt 24. Das Subjekt 22 ist die Ressource, z.B. Katalysatortinte, die beschrieben wird. Das Prädikat 23 ist eine Eigenschaft, z.B. verarbeitet, einer Ressource, die beschrieben werden soll. Das Objekt 24 ist der konkrete Wert dieser Eigenschaft, z.B. ein eindeutig identifizierter Verarbeitungsprozess. Jedes Tripel 21 repräsentiert somit eine logische Aussage bezüglich einer Beziehung zwischen dem Subjekt 22 und dem Objekt 24. Mehrere dieser RDF-Ausdrücke 21 bilden einen zusammenhängenden RDF-Graphen, der als semantisches Netzwerk betrachtet werden kann.

Dabei sind Subjekte 22 und Objekte 24 als Knoten 25, Prädikate 23 als Kanten in der Graphdatenbank 110 repräsentiert. Kanten 26 verbinden jeweils zwei Knoten 25 und stellen so Beziehungen dar. Kanten 26 können Eigenschaften und eine Richtung haben. Eine Kante 26 muss einen Typ haben. Knoten 25 sind Instanzen zugehöriger Klassen und können eine beliebige Anzahl von Eigenschaften haben. Zudem können Knoten 25 eine beliebige Anzahl von "Bezeichnungen" 27 haben. Bezeichnungen 27 fassen Knoten zu Mengen zusammen, wie z.B. Materialien 6 und Prozesse 7. Insbesondere bei einer umfangreichen Graphdatenbank 110 können Kanten 26 eines Knoten 25 in einer Adjazenzliste gespeichert sein. In einer Adjazenzliste werden bei einem Knoten 25 alle von ihm ausgehenden Kanten 26 gespeichert. Anders als bspw. in einer Matrixstruktur müssen somit nicht ganze Zeilen und/oder ganze Spalten abgefragt werden, um alle Nachbarknoten eines Knotens 26 zu identifizieren.

Wie in Figur 2 dargestellt, wird ein einem zweiten Schritt S2 auf Basis der Ontologie 16 und des Datenmodells eine erfindungsgemäße Graphdatenbank 110 konzipiert. Eine Graphdatenbank ist eine Datenbank, die auf Graphentheorie basiert. Sie besteht aus einer Menge von Objekten, die Knoten oder Kanten sein können. Knoten repräsentieren Gegenstände, die materiell, immateriell, konkret und/oder abstrakt sein können. Kanten verbinden Knoten mit anderen Knoten und stellen die Beziehung zwischen ihnen dar. Graphdatenbanken können beispielsweise gemäß dem Konzept des sogenannten Labeled-Property-Graphs (LPG) oder des sogenannten Resource Description Framework (RDF) aufgebaut sein. Der Zugriff auf Knoten und Kanten in einer erfindungsgemäßen (nativen) Graphdatenbank ist eine effiziente Operation mit konstanter Laufzeit und ermöglicht es, schnell Millionen bzw. eine äußerst große Zahl von Kanten pro Sekunde zu durchlaufen. Unabhängig von der Gesamtgröße der Datenmenge eignen sich Graphdatenbanken insbesondere für die Verarbeitung stark verbundener Daten und komplexer Abfragen.

Im Hinblick auf die Anforderungen des erfindungsgemäßen Systems 100 ist die Verwendung einer Graphdatenbank gegenüber einer relationalen Datenbank als Alternativlösung vorteilhaft. Das erfindungsgemäße System 100 ist mit hochgradig heterogenen Daten konfrontiert. Während die Datenstruktur einer relationalen Datenbank starr ist, ist die Datenstruktur einer Graphdatenbank hochgradig flexibel. Für das erfindungsgemäße System 100 ist das Erkennen von Korrelationen bzw. direkten und indirekten Zusammenhängen wichtig. Während es innerhalb einer relationalen Datenbank schwierig ist, indirekte Beziehungen auszudrücken, sind die Darstellung von Beziehungen und Ketten von Beziehungen das Wesensmerkmal einer Graphdatenbank. Das erfindungsgemäße System 100 soll Korrelationen, direkte und indirekte Zusammenhänge sowie Ähnlichkeiten identifizieren/vorhersagen können. Während dies bei einer relationalen Datenbank in der Praxis nur mit speziellen, Klbasierten Ansätzen möglich ist, ist dies bei einer Graphdatenbank auch mit klassischen bzw. graphbasierten Ansätzen möglich. Für das erfindungsgemäße System ist die Möglichkeit der Datenvisualisierung wesentlich. Während bei einer relationalen Datenbank dazu separate Visualisierungstools eingesetzt werden müssen, beinhaltet die Datenstruktur einer Graphdatenbank bereits die Visualisierung von Daten und deren Zusammenhängen.

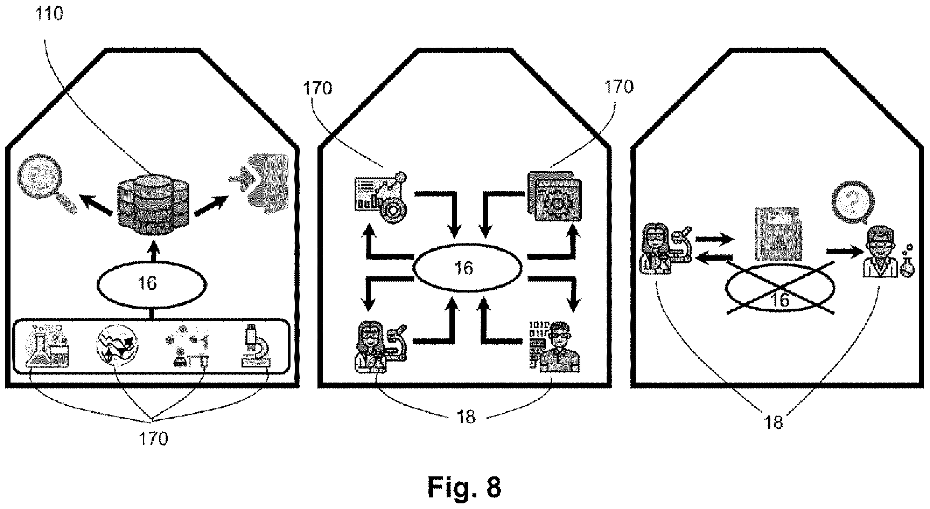

Wie in Figur 8 dargestellt, kann die konkrete Umsetzung im zweiten Schritt S2 einer erfindungsgemäßen Graphdatenbank 110 mit Hilfe von Programmwerkzeugen wie Neo4j, Neomodel 20a und Cypher 20b erfolgen. Neo4j ist eine in Java implementierte Open-Source-Graphdatenbank deren Version 1.0 im Februar 2010 freigegeben wurde. Neomodel 20a ist ein Objekt-Graph-Abbildungswerkzeug OGM (engl. "Object Graph Mapper") für Neo4j-Graphdatenbanken 110. Ein Objekt-Graph-Abbildungswerkzeug OGM bildet Knoten und Beziehungen eines Graphen auf Objekte und Referenzen in einem konkreten Datenmodell ab. Objektinstanzen werden auf Knoten abgebildet, während Objektreferenzen mittels Beziehungen und/oder Serien auf Eigenschaften abgebildet werden. Cypher 20b ist eine Open-Source-Graphenabfragesprache für Neo4j-basierte Graphdatenbanken. Das Cypher Open-Source Projekt stellt alle benötigten Spezifikationen zur Verfügung, um ohne spezielle Kenntnisse der konkreten Speicherungsform effiziente Abfragen zum Erstellen, Lesen, Aktualisieren oder Löschen eines Graphen erstellen zu können.

In einem dritten Schritt S3 werden die für ein Forschungsgebiet bzw. ein bestimmtes Forschungsziel relevanten Informationen und Daten von der Datenerfassungseinheit 150 lokalisiert und erfasst. Ein Beispiel für ein Forschungsgebiet und eine Fragestellung ist bspw. die Auswirkung von Lösungsmitteln auf die Herstellung von Katalysatorschichten für PE-Brennstoffzellen. Informationen und Daten können automatisiert oder halb-automatisiert mittels eine geeignet eingerichteten Datenerfassungseinheit 150 lokalisiert werden, bspw. mit Hilfe von Crawlern. Dabei werden potenziell relevante (historische) Informationen, insbesondere Fachartikel, Publikationen, Versuchsreihen, Vorträge, Kommentierungen und/oder sonstige relevante Aufzeichnungen von durchgeführten Versuchen und/oder Dokumentationen lokalisiert. Zudem wird die Relevanz der Inhalte geprüft und ggf. werden die Inhalte extrahiert, bspw. auch mit Hilfe von Text-Mining-Verfahren im Falle von wenig strukturierten Textdaten. Auf diese Weise können alle externen / veröffentlichten und internen / unveröffentlichten experimentellen Daten, Modellierungsdaten und Rohdaten zu einem Forschungsgebiet bzw. Fragestellung gesammelt und, bspw. auf Grundlage von Herstellungsschritten, klassifiziert werden.

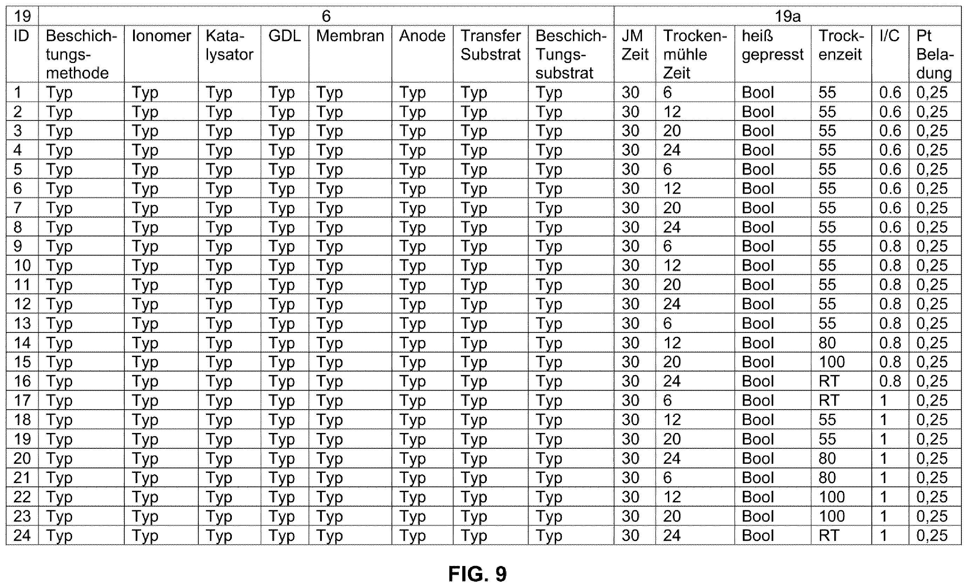

In einem vierten Schritt S4 können die von der Datenerfassungseinheit 150 erfassten Daten und Informationen in einer erfindungsgemäßen Graphdatenbank 110 importiert und gespeichert werden. Diese Daten können bspw. Messdaten und Simulationsdaten von Experimenten und Herstellungsprozessen umfassen. Figur 9 zeigt ein Beispiel eines Imports von Rohdaten in Tabellenform in eine Graphdatenbank 110. Im Beispiel der Figur 9 stellen die Zeilen einer der Tabelle eine Brennstoffzellenfertigung dar, bspw. gekennzeichnet durch eine Herstellungsidentifikationsnummer 19. Die Spalten stellen die Parameter 19a und Materialien 6 der Brennstoffzellenfertigung dar. Zum Import der Rohdaten ist ein entsprechendes Verständnis des Herstellungsprozesses erforderlich, sodass die Inhalte der Tabelle erkannt und den Schnittstellen 120 bzw. dem Datenmodell der Graphdatenbank 110 zugeordnet werden können. Alternativ können geeignet eingerichtete, leicht verständliche Schnittstellen 120 genutzt werden, bspw. Elektronisches Laborbuch (ELN) Schnittstellen (engl. "Electronic Laboratory Notebook") oder geeignet spezifizierte .out-Dateien 120a. Ebenso ist es möglich, Anwendern mit Hilfe von Anwendungsprogrammierschnittstellen API 120b (engl. "Application Programming Interface") eine geeignete, klar verständliche Struktur zur Eingabe von Daten vorzugegeben, wie bspw. in Figur 8 dargestellt. Eine solche Erfassung und Speicherung in einer erfindungsgemäßen Graphdatenbank 110, ermöglicht ein schnelles Auffinden von Daten und Informationen, deren Rückverfolgbarkeit sowie einheitliche und effektive Nutzung durch ein Netzwerk von miteinander verbundenen Instrumenten- und Rechnerdatenzentren sowie verschiedenen Betreibern und Akteuren.

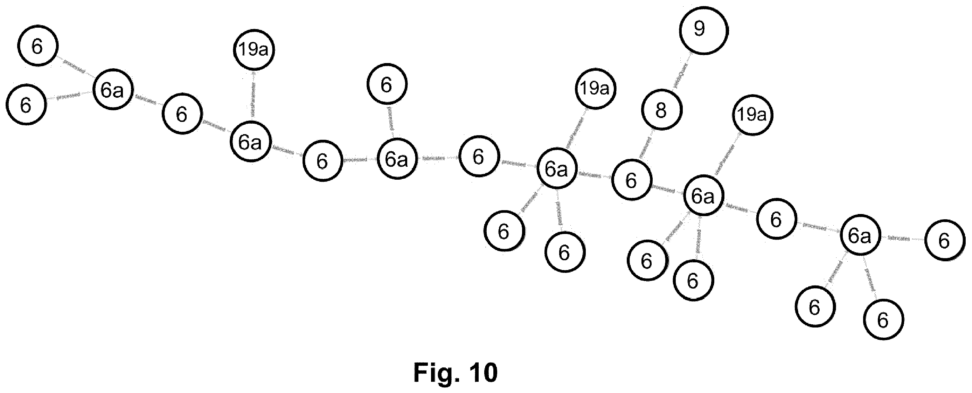

Figur 10 zeigt beispielhaft die Visualisierung der Herstellung einer Brennstoffzelle auf Basis der in einer Graphdatenbank 110 gespeicherten Daten. Die Speicherung als Graph ermöglicht, alle Parameter 19a und verwendeten Materialien 6, Herstellungsstufen 6a, sowie alle Beziehungen zwischen Materialien 6, Herstellungsstufen 6a und Parametern 19a bis zum Endprodukt 6b des Herstellungsprozesses abzubilden und darzustellen. Zudem ermöglichen eine erfindungsgemäße Ontologie 16 und das auf ihr fußende Datenmodell einer Graphdatenbank 110 die Darstellung des Herstellungsprozesses einschließlich der Charakterisierung, bzw. der Messung 8 von Eigenschaften 9. Dies illustriert, dass das resultierende Modell sehr flexibel ist, da die Anzahl der Verarbeitungsschritte und Parameter nicht festgelegt ist. Die Regeln und Einschränkungen der Ontologie 16 und des daraus resultierenden Datenmodells erzwingen, dass nur sinnvolle Beziehungen zwischen Knoten eingeführt werden. Die dem Datenmodell zugrundeliegende Ontologie 16 hilft, das Datenmodell ggf. zu erweitern, weitere Datenmodelle geeignet anzupassen und/oder zu vereinheitlichen.

Zudem ermöglicht die erfindungsgemäße Aufbereitung der Daten eine einfache, aussagekräftige Visualisierung. So zeigt Figur 11 ein Beispiel einer Visualisierung eines Herstellungsprozesses 29 einer Brennstoffzelle, welche den Prozess von den Ausgangsstoffen bis zur fertigen Brennstoffzelle sowie Messungen an der Brennstoffzelle umfasst. Zum anderen wird eine Visualisierung einer Simulation 28 dargestellt.

In einem fünften und sechsten Schritt S5, S6 (siehe Figur 2) können die in der Graphdatenbank 110 gespeicherten Daten ergänzt, vereinheitlicht und angereichert werden. Beispielsweise kann dies auf Basis geeigneter Regressionsverfahren und/oder musterbasierten (engl. "Pattern Matching") Verfahren erfolgen.

Bevorzugt werden auf Basis der in der Graphdatenbank 110 gespeicherten Datensätze in einem fünften Schritt S5 Trainingsdatensätze 30 (siehe Figur 12) zusammengestellt bzw. erzeugt. Mittels dieser Trainingsdatensätze kann ein geeigneter Algorithmus, der durch die Datenverarbeitungseinheit 130 ausgeführt werden kann, insbesondere eine Künstliche Intelligenz KI 31, wie bspw. Maschinelles Lernmodell ML (engl. "Machine Learning") und Tiefes Lernmodell DL (engl. "Deep Learning") trainiert werden. Eine solche KI 31 kann bspw. mittels des erzeugten Trainingsdatensatzes 30 und unüberwachtem Lernen trainiert werden. Dabei spiegelt das Modell übergreifendes Wissen wider. Weitere Verfeinerungen und Verbesserungen für spezifischere Aufgaben bzw. Teildatensätze können vorgenommen werden, insbesondere mittels einer Anpassung der Gewichte des trainierten Kl-Modells. Im Anschluss, in einem sechsten Schritt S6, kann die so trainierte KI 31 auf die weiteren Datensätze in der Datenbank 110 angewendet werden, um die Inhalte, Formate, Attribute, Kennzeichnungen der Daten zu vervollständigen, zu vereinheitlichen und anzureichern.

Als Beispiel für den fünften und sechsten Schritt S5, S6 (siehe Figur 2) kann das Sammeln von einer großen Menge von Daten zu den physikalisch-chemischen Eigenschaften von Katalysatormaterialien in einer Datenbank 110 dienen. Die gesammelten Datensätze können bspw. Leitfähigkeit, elektrische Eigenschaften, Strom und Spannung enthalten. Für einige Materialien fehlen in der Datenbank 110 Einträge zum Faraday'schen Wirkungsgrad bzw. wurden diese Daten nicht erfasst oder gemessen. Der KI/ML-Algorithmus kann in einem solchen Fall aus den vollständigen Einträgen (in Echtzeit) Korrelationen bestimmen, um die Beziehung zwischen Spannung und Faraday'schen Wirkungsgrad abzuleiten. Diese Autokorrelationsfunktion kann dann verwendet werden, um den Faraday'schen Wirkungsgrad für die Datensätze bzw. Materialien vorherzusagen und zu ergänzen, bei denen er fehlt. Dadurch werden die Datensätze / Daten besser vergleichbar und analysierbar. Dies hilft, über verschiedene Datenquellen 170, 220, 230, 240, 250 (siehe Figur 12) hinweg Analysen durchzuführen sowie übergreifende Korrelationen, Zusammenhänge und Strukturen in den ansonsten unvollständigen und/oder heterogenen Daten zu erkennen und zu modellieren.

Forschende, insbesondere auf dem Gebiet der Brennstoffzellen, Elektrolyseure und Batterien, in der praktischen Arbeit der dritten Phase, Phase III, mit sehr komplexen Systemen, Instrumenten bzw. Endgeräten konfrontiert. Diese Komplexität führt zu einem hochdimensionalen Parameterraum. Daher sind datengesteuerte Modelle ein vielversprechender Ansatz zur Entscheidung über Forschungsarbeiten und deren Planung in der zweiten Phase, Phase II, sowie zur Beschleunigung und Optimierung von Arbeitsabläufen in der Durchführung der praktischen Forschung und Entwicklungsarbeiten in der dritten Phase, Phase III. So können datengesteuerte Modelle können bspw. in selbststeuernden Laboren 170 eingesetzt werden, um Rückkopplungsschleifen zu schaffen, die eine iterative Optimierung des Herstellungsprozesses ermöglichen und/oder um neue Materialien zu finden.

Um datengesteuerte Modelle zur optimierten Planung und Durchführung von Forschungsarbeiten zu erzeugen, können in einem siebten Schritt S7 (siehe Figur 2) mittels der Datenverarbeitungseinheit 130 statistische und kausale Zusammenhänge zwischen den Daten der Datenbank 110 identifiziert und zur Modellierung dieser Zusammenhänge statistische Modelle 33 erzeugt oder bekannte statistische Modelle 33 bzw. physikalisch-chemische Modelle 34 zugeordnet werden (siehe Figur 13). Dies kann in einer Ausführung mittels Methoden der Künstlichen Intelligenz KI, bspw. des Maschinellen Lernens ML bzw. des Tiefen Lernens DL, erfolgen.

Wie in Figur 2 dargestellt, können in einem achten Schritt S8 mittels der Datenverarbeitungseinheit 130 und auf Basis der ggf. in den vorhergehenden Schritten S5, S6 vervollständigten, vereinheitlichten und angereicherten Daten bzw. der im vorhergehenden Schritt S7 identifizierten und modellierten statistischen und kausalen, physikalisch-chemischen Zusammenhänge Forschungsziele identifiziert werden, bspw. die Herstellung bestimmter Materialien und/oder deren Geräteintegration. Zudem können die zur Zielerreichung relevanten Arbeitsschritte und Aktivitäten samt deren gegenseitigen Abhängigkeiten in den Daten identifiziert werden. Insbesondere können mittels der identifizierten statistischen und kausalen Zusammenhänge auch die zur Zielerreichung nicht erforderlichen Arbeitsschritte und Aktivitäten identifiziert werden. Auf dieser Basis können optimierte Workflows identifiziert bzw. generiert werden. Auch dies kann bspw. mittels Methoden der Künstlichen Intelligenz KI, insbesondere des Maschinellen Lernens ML bzw. des Tiefen Lernens DL, erfolgen.

Wie bereits oben erwähnt, erfordert die Durchführung der praktischen Arbeiten in der dritten Phase, Phase III, in der Regel Zugang zu hochspezialisierten Instrumenten und Geräten, welche sich auch außerhalb der jeweils forschenden Organisation befinden können. In einem neunten Schritt S9 (siehe Figur 2) können, bspw. mittels der Datenerfassungseinheit 150, Informationen zur Verfügbarkeit von Endgeräten, Instrumenten, Systemen und/oder sonstigen Ressourcen 170 lokalisiert, erfasst und in der Graphdatenbank 110 abgespeichert werden. Solche Informationen und Daten können bspw. auf vernetzten Endgeräten 170 und/oder ihnen zugeordneten Verwaltungseinheiten 210, wie bspw. Datenbanken, PCs, Servern, abgelegt sein. Beispielsweise können die physikalisch-chemischen Daten für alle Katalysatormaterialien, die bei der Wasserstoffproduktion verwendet werden, in einem sogenannten Datensee gespeichert werden. Dabei kann der Zugriff durch interne und/oder externe Mitarbeiter auf die gesamten oder einen Teil der im Datensee gespeicherten Materialien beschränken bzw. die Bedingungen des Zugriffs definiert, kommuniziert und verwaltet werden. Die Lokalisierung, Erfassung und Speicherung in der Graphdatenbank 110 hilft, die Planung in der zweiten Phase, Phase II, und die spätere Nutzung in der dritten Phase, Phase III, effizient, bevorzugt automatisiert, gestalten zu können. Die gespeicherten Informationen können sowohl für das aktuell durchzuführende als auch für weitere, nachfolgende Forschungsvorhaben genutzt werden.

Entsprechend des ausgewählten Forschungsziels, kann in einem zehnten Schritt S10 (siehe Figur 3), ein geeigneter Workflow zur Erreichung des Forschungsziels ausgewählt werden. Bevorzugt kann dieser Schritt S10 durch die Ausführungseinheit 140 automatisiert erfolgen. In dem drauffolgenden Schritt S11 wird der als nächstes auszuführende Arbeitsschritt ausgewählt. Sofern die Bestimmung des nächsten Arbeitsschritts erfolgreich möglich war, kann die Ausführungseinheit 140 in dem nachfolgenden Schritt S12 ein Endgerät 170 zur Durchführung des Arbeitsschritts oder einer Aktivität des Arbeitsschritts auswählen, und in einer bevorzugten Ausführung zur Durchführung starten. Die Auswahl des Endgeräts 170 kann in Abhängigkeit der Art, des Umfangs und/oder des Zeitpunkts des durchzuführenden Arbeitsschritts sowie der Art, des Umfangs, des Zeitpunkts und/oder dem Status der Erfüllung der Bedingungen der Verfügbarkeit des Endgeräts 170 erfolgen.

Zudem kann bei der Auswahl S12 des Endgeräts 170 eine Kennzeichnung des Endgeräts 170 und des durchgeführten Arbeitsschritts generiert werden. Eines solche Kennzeichnung kann bei der Erfassung der Ergebnisdaten in einem späteren Schritt (siehe S16) von der Datenerfassungseinheit 150 miterfasst und gespeichert werden. Dies ermöglicht, die Herkunft und Art der Entstehung der Daten eindeutig identifizieren. Eine solche Kennzeichnung kann bspw. eine eindeutige Kodierung in Form eines alphanumerischen Codes, eines Bar-Codes oder eines QR-Codes sein. Ebenso kann eine solche Kennzeichnung, bspw. im Falle von zu versendenden physischen Materialien, einen eingebetteten Speicherchip und eine einfache Ausführungsfunktion zur Sicherstellung der Datenqualität und Datenkuratierung umfassen. Die Ausführungsfunktion kann dabei bspw. auf einem einfachen, in dem Speicherchip eingebetteten Kl-Algorithmus basieren.

Im folgenden Schritt S13 kann das ausgewählte Endgerät 170 den ausgewählten Arbeitsschritt bzw. die Aktivität durchführen. Wie bereits oben erläutert, können Endgeräte 170 eine sehr große Menge an Rohdaten als Ergebnis erzeugen. Daher können die Rohdaten in den nachfolgenden Schritten S14, S15 in zugeordneten Edge/Fog-Einheiten 180, 190 analysiert und verarbeitet werden. Die Rohdaten/Eingangsdaten werden nach Abschluss der Analyse verworfen und nur noch die Ergebnisdaten weitergeleitet. Dies hilft die Kapazität des Kommunikationsnetzes 200 effizient zu nutzen und Engpässe und zeitliche Verzögerungen zu vermeiden. Zudem hilft dies, das Rauschen verbessert aus den Rohdaten herauszufiltern, bevor sie an die Datenerfassungseinheit 150 gesendet und von der Datenerfassungseinheit 150 im nächsten Schritt S16 strukturiert erfasst und abgespeichert werden.

In dem nachfolgenden Schritten S17 können die Daten, vergleichbar zu dem bereits vorher beschriebenen sechsten Schritt S6, durch die Datenverarbeitungseinheit 130 vervollständigt, vereinheitlicht und angereichert werden. Ebenso können die Daten zur Beurteilung der Ergebnisse eines Arbeitsschritts, bspw. die Ergebnisse eines Experiments, einer Herstellung, einer Simulation oder einer Messung, durch die Datenverarbeitungseinheit 130 validiert, begründet bzw. plausibilisiert und charakterisiert werden. Dazu können, vergleichbar zu dem bereits zuvor beschriebenen siebten Schritt S7, Zusammenhänge identifiziert, statistisch modelliert 33 oder statistischen Modellen 33 und/oder kausalen Modellen 34 zugeordnet werden (siehe Figur 13).

Nicht immer ist es möglich, dass der ausgewählte Workflow bereits alle potenziellen Ergebnisse und die daraus abzuleitenden Schlussfolgerungen und Arbeitsschritte vorwegnimmt bzw. umfasst. Dies kann erhöhte Aufwände, erhöhten Zeitaufwand, nicht optimale Entscheidungen und/oder nicht optimale Forschungs- und Entwicklungsergebnisse zur Folge haben. Daher können in einem nachfolgenden Schritt S19, vergleichbar zu dem zuvor beschriebenen achten Schritt S8, jeder ausgeführte Arbeitsschritt und Workflow analysiert und die Analyseergebnisse, bspw. in einem vorab trainierten Kl-Algorithmus 31 verwendet werden, um neue Arbeitsschritte und/oder Workflows für die nächste Ausführung vorzuschlagen und/oder zu generieren. So können bei jeder Iteration neue Arbeitsschritte und/oder Workflows vorgeschlagen werden.

Danach kann wieder der Schritt S11 zur Bestimmung des nächsten Arbeitsschritts durchgeführt werden. Dabei kann die Auswahl des nächsten Arbeitsschritts von dem vorausgegangenen Arbeitsschritt bzw. dem Ergebnis des vorausgegangenen Arbeitsschritts abhängig sein. Beispielsweise besteht der Prozess der Herstellung einer Katalysatorschicht aus der Auswahl der Vorläufermaterialien, wie Lösungsmittel, Katalysator, lonomermedium, gefolgt von spezifischen Mischbedingungen, wie pH-Wert und Temperatur, und schließlich einer bestimmten Charakterisierung vor dem Beschichtungsverfahren. Entsprechend kann bei einem vorgegebenen Ziel, wie bspw. die Herstellung einer Katalysatorschicht, ein bestimmter, optimierter Workflow ausgewählt und auf dieser Basis die Arbeitsschritte des gesamten Herstellungsprozesses automatisch ausgewählt und ausgeführt werden. Dabei können die relevanten Datenpipelines, also die Kommunikationskanäle 200 zur Übermittlung der relevanten Messdaten und Ergebnisse von den ausführenden Endgeräten 170, für jeden Schritt der Herstellung automatisch aufgerufen und in den ausgewählten Workflows einbezogen werden.

Kann ein nächster Arbeitsschritt automatisiert durch die Ausführungseinheit 140 bestimmt werden S11a, so beginnt erneut ein Zyklus S12 - S19 der Auswahl eines Endgeräts 170, der Durchführung eines Arbeitsschritts und der Auswertung der Ergebnisse. Kann ein Arbeitsschritt nicht automatisiert durch die Ausführungseinheit 140 bestimmt werden S11b, kann in einem weiteren Schritt S20 die Generierung bzw. Bestimmung eines nächsten Arbeitsschritts manuell durch eine forschende Person bestimmt werden S20a und ein Zyklus S12 - S19 erneut durchgeführt werden. Für ein solches manuelles Eingreifen, können in diesem Schritt S20 Inhalte und Zusammenhänge der in der Graphdatenbank 110 gespeicherten Daten mittels der interaktiven Mensch-Maschine-Schnittstelle 160 visualisiert und Auswahlen und Eingaben erfasst werden. Ist die manuelle Generierung und Auswahl eines nächsten Schrittes nicht möglich S20b, so kann dies bedeuten, dass das Forschungsziel erreicht und/oder das Forschungsvorhaben (vorzeitig) beendet ist S21.

Die beschriebenen Visualisierungen, wie auch in Figuren 10 und 11 beispielhaft dargestellt, und die Möglichkeit eines manuellen Eingreifens können auch in den anderen beschriebenen Schritten vorgesehen sein. Erfindungsgemäß können so verschiedene Datenzentren oder instrumentellen Messungen 170 in den dezentralisierten Messzentren von verschiedenen Betreibern oder Akteuren 18 verknüpft und abgebildet werden. Forschenden Experten wird so eine zeitnahe, effiziente (vorläufige) Einschätzung der Daten und Ergebnisse ermöglicht.

Die Möglichkeit einer Visualisierung und eines manuellen Eingreifens, stehen dabei nicht im Widerspruch zu einer (IoT-basierten) Maschine zu Maschine Kommunikation den Einheiten des erfindungsgemäßen Forschungs- und Entwicklungssystems 100.

Figur 14 zeigt einen Ablauf und eine Architektur eines erfindungsgemäßen Ausführungsbeispiels, welches eine semantische Suche mittels eines großen Sprachmodells (engl. Large Language Models; LLM) umfasst.

Ein Datenmodell und eine Ontologie 16, die zur Kennzeichnung von Datenbeständen verwendet werden, sind entscheidende Bestandteile einer semantischen Suchpipeline, die große Sprachmodelle 350 einsetzt. LLMs 350 werden verwendet, um Beschreibungen und alternative Bezeichnungen für Ontologieklassen zu erzeugen. Diese Bezeichnungen und Beschreibungen werden zur Erzeugung von Einbettungen 320, das heißt Vektordarstellungen der menschlichen Sprache, verwendet. Die generierten Einbettungen 320 werden mit den Ontologieklassen in der Datenbank 110 verknüpft.

Bei einer Abfrage einer Datenbank 110, beispielsweise nach einem Herstellungsprozess, muss ein Nutzer 300 die Struktur des gewünschten Prozesses als Suchanfrage 310 beschreiben, wie beispielsweise Materialien, Zwischenprodukte, Produkte, Parameter, Eigenschaften und Herstellungsschritte. Für jeden Teil der Suchanfrage 310 wird eine Einbettung 320 erzeugt, die an die Datenbank 110 weitergegeben wird, um die nächstgelegene Einbettung 320 in der Menge der Ontologieeinbettungen zu finden. Die sich daraus ergebenden Übereinstimmungen werden daraufhin überprüft, ob es unter ihnen Muster 330 gibt, die mit dem beschriebenen Prozess beziehungsweise Teilprozess übereinstimmen. Die übereinstimmenden Muster bzw. Knotenmuster 330 werden abgerufen, die in den Knoten 25 gespeicherten Daten werden geparst und in eine vordefinierte Ausgabestruktur 340, wie beispielsweise Tabelle oder JSON-Format, umgewandelt.

JSON (engl. JavaScript Object Notation) bezeichnet ein standardisiertes textbasiertes Format zur Darstellung strukturierter Daten auf der Grundlage der JavaScript-Objektsyntax.

In einem weiteren erfindungsgemäßen Ausführungsbeispiel erfolgt die Datenübernahme automatisiert. Dabei werden technische Tabellendaten von einer Pipeline (halb-)automatisch eingelesen, unabhängig von der Struktur, Terminologie oder Größe einer Tabelle. Um einen Transformationsprozess zur automatischen Datenübernahme zu starten, wird die Tabelle geparst und ein Wörterbuch mit den Überschriften, einigen Beispielzeilen und einer Zeichenkette, die zusätzlichen Kontext liefert, generiert und an die Pipeline weitergeleitet. Dabei besteht die Pipeline aus einer Reihe von LLM-Instanzen, die gekoppelt sind, um die folgenden Aufgaben zu lösen:
Aufgabe 1, Zuordnung einer Spalte einer Tabelle zu einer Knotenbezeichnung einer Datenbank 110,
Aufgabe 2, Identifizierung von Knotenattributen, die in Überschriften und Zellen einer Spalte zu finden sind,
Aufgabe 3, Zusammenführung von Spalten, die auf denselben Knoten abgebildet werden müssen, wie beispielsweise Spalte 1 mit Überschrift MaterialA_name und Spalte 2 mit MaterialA_ID, welche zwei Attribute desselben Knotens enthalten, und
Aufgabe 4, Ableitung von Beziehungen, das heißt semantische Verbindungen zwischen Knoten, die aus Spalten extrahiert wurden.

Die (halb-)automatische Datenübernahme ist von entscheidender Bedeutung, da die Datenbestände in der Materialwissenschaft oft in kleinen, isolierten Tabellen vorliegen und Schritte zur Automatisierung ihrer Aufnahme erforderlich sind, um leistungsfähige Trainingsdatensätze zu erstellen. Darüber hinaus bereichert und pflegt die Pipeline die Daten, indem sie die Terminologie in der Tabelle auf die Ontologie 16 abbildet, was die Interoperabilität erhöht. Darüber hinaus fördert die Pipeline die Vernetzung der Daten, was sie wertvoller macht, da sie die Erstellung sehr spezifischer Trainingsdatensätze ermöglicht.

## Patentansprüche

1. Forschungs- und Entwicklungssystem (100) geeignet zur Erforschung und/oder Entwicklung von Produkten und Herstellungsverfahren für Produkte, insbesondere Energiematerialien, welches eine Datenbank (110) und eine Schnittstelle (120) zur Eingabe und Ausgabe von Daten, eine Datenverarbeitungseinheit (130) und eine Ausführungseinheit (140) umfasst,
wobei die Datenbank (110) eine Graphdatenbank ist, die eingerichtet ist, Daten gemäß eines Datenmodells abzuspeichern, welches eine wohldefinierte Ontologie (16) abbildet;
wobei die Datenverarbeitungseinheit (130) eingerichtet ist,
die in der Graphdatenbank (110) gespeicherten Daten zu vereinheitlichen, zu ergänzen, und/oder anzureichern,
statistische und/oder kausale Zusammenhänge zwischen Daten in der Datenbank zu identifizieren und diese Zusammenhänge mittels statistischer Modelle (33) und/oder physikalisch-chemischer Modelle (34) zu modellieren und/oder
in den gespeicherten Daten Forschungs- und Entwicklungsziele zu identifizieren und/oder zur Erreichung von Forschungs- und Entwicklungszielen geeignete Workflows und/oder Arbeitsschritte zu generieren und/oder anzupassen;
wobei die Ausführungseinheit (140) eingerichtet ist,
einen Workflow zur Erreichung eines Entwicklungsziels in Abhängigkeit des Entwicklungsziels auszuwählen und/oder
einen nächsten Arbeitsschritt aus einer Menge von Arbeitsschritten eines ausgewählten Workflows auszuwählen, insbesondere in Abhängigkeit von einem vorausgegangenen Arbeitsschritt und/oder einem Ergebnis eines vorausgegangenen Arbeitsschritts.

2. Forschungs- und Entwicklungssystem (100) nach einem der vorherigen Ansprüche, wobei die Ausführungseinheit (140) eingerichtet ist, ein Endgerät (170) zur Durchführung eines Arbeitsschritts auszuwählen, insbesondere in Abhängigkeit der Art, des Umfangs und/oder des Zeitpunkts des durchzuführenden Arbeitsschritts und/oder der Art, des Umfangs, des Zeitpunkts und/oder dem Status der Erfüllung der Bedingungen der Verfügbarkeit des Endgeräts (170).

3. Forschungs- und Entwicklungssystem (100) nach dem vorherigen Anspruch, wobei das Forschungs- und Entwicklungssystem (100) eine Datenerfassungseinheit (150) umfasst, welche eingerichtet ist,
für ein ausgewähltes Forschungsziel relevante Informationen, insbesondere Fachartikel, Publikationen, Versuchsreihen, Vorträge, Kommentierungen und/oder sonstige relevante Aufzeichnungen und/oder Dokumentationen zu lokalisieren, zu erfassen und/oder in der Graphdatenbank (110) zu speichern; und/oder
ein Ergebnis einer Durchführung eines Arbeitsschritts durch ein Endgerät (170) zu lokalisieren, zu erfassen, bezüglich der Entstehung und Herkunft zu kennzeichnen und/oder in der Graphdatenbank (110) zu speichern.

4. Forschungs- und Entwicklungssystem (100) nach einem der vorherigen Ansprüche, wobei das Forschungs- und Entwicklungssystem (100) eine Datenerfassungseinheit (150) umfasst, welche eingerichtet ist,
Informationen zu Art, Umfang und/oder Zeitpunkt der Verfügbarkeit und/oder Nicht-Verfügbarkeit eines Endgeräts (170), und/oder
Informationen zu technischen, administrativen, rechtlichen, vertraglichen und/oder sonstigen Bedingungen der Verfügbarkeit eines Endgeräts (170) und zum Status der Erfüllung der Bedingungen der Verfügbarkeit
zu erfassen und/oder in der Graphdatenbank (110) zu speichern.

5. Forschungs- und Entwicklungssystem (100) nach einem der vorherigen Ansprüche, wobei das Forschungs- und Entwicklungssystem (100) eine interaktive Mensch-Maschine-Schnittstelle (160) umfasst, welche eingerichtet ist,
die Ergebnisse eines Arbeitsschritts und oder der Arbeitsschritte eines Workflows graphisch darzustellen,
einen Workflow, einen Arbeitsschritt, die Verfügbarkeit eines Endgeräts zur Durchführung eines Arbeitsschritts darzustellen und/oder
eine Eingabe eines menschlichen Nutzers zur Auswahl eines durchzuführenden Workflows, Arbeitsschritts und/oder Endgerät (170) zur Durchführung eines Arbeitsschritts zu empfangen.

6. Forschungs- und Entwicklungssystem (100) nach einem der vorherigen Ansprüche, wobei das Forschungs- und Entwicklungssystem (100) einen Server, ein Cloud-System, ein Endgerät (170), eine Edge-Computing-Einheit (180) und/oder eine Fog-Computing-Einheit (190) umfasst, welche in einer bevorzugten Ausführung loT-fähig sind.

7. Forschungs- und Entwicklungssystem (100) nach einem der vorherigen Ansprüche, wobei die Graphdatenbank (110), die Datenverarbeitungseinheit (130), die Ausführungseinheit (140), die Datenerfassungseinheit (150), das Endgerät (170) die Edge-Computing-Einheit (180), die Fog-Computing-Einheit (190) und/oder die interaktive Mensch-Maschine Schnittstelle (160) eingerichtet sind, Methoden der künstlichen Intelligenz (Kl), insbesondere des Maschinellen Lernens (ML) und/oder des tiefen Lernens (DL), anzuwenden und/oder Ergebnisse in Echtzeit bereitzustellen.

8. Verfahren zum Betrieb eines Forschungs- und Entwicklungssystems (100) nach einem der vorherigen Ansprüche, **dadurch gekennzeichnet, dass** es einen oder mehrere der Schritte a) bis k) umfasst und diese, bevorzugt unter Verwendung von Methoden der Künstlichen Intelligenz und/oder in Echtzeit, ausführt:
a) Abspeichern von Daten in einer Graphdatenbank (110) gemäß eines Datenmodells, welches eine wohldefinierte Ontologie 16) abbildet;
b) Vereinheitlichen, Ergänzen, und/oder Anreichern von in der Graphdatenbank (110) gespeicherten Daten;
c) Identifizieren von statistischen und/oder kausalen Zusammenhängen zwischen in der Graphdatenbank (110) gespeicherten Daten und/oder Modellieren dieser Zusammenhänge mittels statistischer Modelle (33) und/oder physikalisch-chemischer Modelle (34);
d) Identifizieren von in den gespeicherten Daten enthaltenen Forschungs- und Entwicklungszielen und/oder Generieren von zur Erreichung der Forschungs- und Entwicklungsziele geeigneten Workflows und/oder Arbeitsschritten;
e) Auswählen eines Workflows zur Erreichung eines Entwicklungsziels in Abhängigkeit des Entwicklungsziels und/oder Auswählen eines Arbeitsschritts aus einer Menge von Arbeitsschritten eines ausgewählten Workflows, insbesondere in Abhängigkeit von einem vorausgegangenen Arbeitsschritt und/oder einem Ergebnis eines vorausgegangenen Arbeitsschritts;
f) Auswählen eines Endgeräts (170) zur Durchführung eines Arbeitsschritts, insbesondere in Abhängigkeit der Art, des Umfangs und/oder des Zeitpunkts des durchzuführenden Arbeitsschritts und/oder der Art, des Umfangs, des Zeitpunkts und/oder dem Status der Erfüllung der Bedingungen der Verfügbarkeit des Endgeräts (170);
g) Analysieren eines Ergebnisses eines Arbeitsschritts durch eine Edge-Computing-Einheit (180) und/oder eine Fog-Computing-Einheit (190) und/oder Weiterleiten des Analyseergebnisses als Ergebnis des Arbeitsschritts;
h) Erfassen, Kennzeichnen bezüglich der Entstehung und Herkunft und/oder Speichern in der Graphdatenbank (110) eines Ergebnisses eines Arbeitsschritts;
i) Lokalisieren, Erfassen und/oder Speichern in der Graphdatenbank (110) von für ein Forschungsziel relevanten Informationen, insbesondere Fachartikel, Publikationen, Versuchsreihen, Vorträge, Kommentierungen und/oder sonstige relevante Aufzeichnungen und/oder Dokumentationen;
j) Lokalisieren, Erfassen und/oder Speichern in der Graphdatenbank (110) von Informationen zu Art, Umfang, Zeitpunkt der Verfügbarkeit und/oder Nicht-Verfügbarkeit eines Endgeräts (170), zu technischen, administrativen, rechtlichen, vertraglichen und/oder sonstigen Bedingungen der Verfügbarkeit eines Endgeräts (170) und/oder zum Status der Erfüllung der Bedingungen der Verfügbarkeit;
k) Graphisches Darstellen eines Ergebnisses eines Arbeitsschritts, mehrerer Arbeitsschritte eines Workflows, eines Workflows, eines Arbeitsschritts und/oder der Verfügbarkeit eines Endgeräts zur Durchführung eines Arbeitsschritts, und/oder
Empfangen einer Auswahl eines menschlichen Nutzers eines durchzuführenden Workflows, Arbeitsschritts und/oder Endgerät zur Durchführung eines Arbeitsschritts.

## Claims

1. Research and development system (100) suitable for researching and/or developing products and manufacturing methods for products, in particular energy materials, which comprises a database (110) and an interface (120) for inputting and outputting data, a data processing unit (130) and an execution unit (140),
wherein the database (110) is a graph database configured to store data according to a data model that maps a well-defined ontology (16);
wherein the data processing unit (130) is configured to
unify, supplement, and/or enrich the data stored in the graph database (110),
identify statistical and/or causal relationships between data in the database and model these relationships by means of statistical models (33) and/or physico-chemical models (34) and/or
identify research and development goals in the stored data and/or generate and/or adapt suitable workflows and/or work steps to achieve research and development goals;
wherein the execution unit (140) is configured to
select a workflow for achieving a development goal as a function of the development goal and/or
select a next work step from a set of work steps of a selected workflow, in particular as a function of a preceding work step and/or a result of a preceding work step.

2. Research and development system (100) according to one of the preceding claims, wherein the execution unit (140) is configured to select a terminal (170) for performing a work step, in particular as a function on the type, scope and/or time of the work step to be performed and/or the type, scope, the time and/or the status of fulfillment of the conditions of availability of the terminal (170).

3. Research and development system (100) according to the preceding claim, wherein the research and development system (100) comprises a data acquisition unit (150) which is configured to
localize, capture and/or store in the graph database (110) information relevant to a selected research goal, in particular specialist articles, publications, test series, lectures, comments and/or other relevant records and/or documentation; and/or
localize a result of an implementation of a work step by a terminal (170) capture it, label it with respect to formation and origin and/or store it in the graph database (110).

4. Research and development system (100) according to one of the preceding claims, wherein the research and development system (100) comprises a data acquisition unit (150) configured to capture
information on the type, scope and/or time of availability and/or non-availability of a terminal (170), and/or
information on technical, administrative, legal, contractual and/or other conditions of availability of a terminal (170) and on the status of fulfillment of the conditions of availability
and/or to store it in the graph database (110).

5. Research and development system (100) according to one of the preceding claims, wherein the research and development system (100) comprises an interactive human-machine interface (160) configured to
display the results of a work step and/or of the work steps of a workflow graphically,
display a workflow, a work step, the availability of a terminal for performing a work step and/or
receive an input from a human user for selecting a workflow to be performed, a work step to be performed and/or terminal (170) for performing a work step.

6. Research and development system (100) according to one of the preceding claims, wherein the research and development system (100) comprises a server, a cloud system, a terminal (170), an edge computing unit (180) and/or a fog computing unit (190), which in a preferred embodiment are IoT-capable.

7. Research and development system (100) according to one of the preceding claims, wherein the graph database (110), the data processing unit (130), the execution unit (140), the data acquisition unit (150), the terminal (170), the edge computing unit (180), the fog computing unit (190) and/or the interactive human-machine interface (160) are configured to apply methods of artificial intelligence (AI), in particular machine learning (ML) and/or deep learning (DL), and/or to provide results in real time.

8. Method for operating a research and development system (100) according to one of the preceding claims, **characterized by** comprising one or more of the steps a) to k) and executing them, preferably using methods of artificial intelligence and/or in real time:
a) storing data in a graph database (110) according to a data model that represents a well-defined ontology (16);
b) unifying, supplementing, and/or enriching data stored in the graph database (110);
c) identifying statistical and/or causal relationships between data stored in the graph database (110) and/or modeling these relationships using statistical models (33) and/or physico-chemical models (34);
d) identifying research and development goals included in the stored data and/or generating workflows and/or work steps suitable for achieving the research and development goals;
e) selecting a workflow for achieving a development goal as a function of the development goal and/or selecting a work step from a set of work steps of a selected workflow, in particular as a function of a preceding work step and/or a result of a preceding work step;
f) selecting a terminal (170) for performing a work step, in particular as a function on the type, scope and/or time of the work step to be performed and/or the type, scope, time and/or status of fulfillment of the conditions of availability of the terminal (170);
g) analyzing a result of a work step by an edge computing unit (180) and/or a fog computing unit (190) and/or forwarding the analysis result as the result of the work step;
h) capturing, labeling with respect to formation and origin and/or storing in the graph database (110) a result of a work step;
i) localizing, capturing and/or storing in the graph database (110) information relevant to a research goal, in particular specialist articles, publications, test series, lectures, comments and/or other relevant records and/or documentation;
j) localizing, capturing and/or storing information in the graph database (110) about the type, scope, time of availability and/or non-availability of a terminal (170), about technical, administrative, legal, contractual and/or other conditions for the availability of a terminal (170) and/or about the status of fulfillment of the conditions for availability;
k) graphically displaying a result of a work step, several work steps of a workflow, a workflow, a work step and/or the availability of a terminal for performing a work step, and/or
receiving a selection from a human user of a workflow or work step to be performed and/or terminal for performing a work step.

## Revendications

1. Système de recherche et développement (100) adapté à la recherche et/ou au développement de produits et de procédés de fabrication de produits, en particulier de matériaux énergétiques, qui comprend une base de données (110) et une interface (120) pour l'entrée et la sortie de données, une unité de traitement de données (130) et une unité d'exécution (140),
la base de données (110) étant une base de données orientée graphe conçue pour stocker des données selon un modèle de données qui représente une ontologie bien définie (16);
l'unité de traitement de données (130) étant conçue pour
uniformiser, compléter et/ou enrichir les données stockées dans la base de données de graphes (110),
identifier des relations statistiques et/ou causales entre les données de la base de données et modéliser ces relations à l'aide de modèles statistiques (33) et/ou de modèles physico-chimiques (34) et/ou
identifier des objectifs de recherche et de développement dans les données stockées et/ou générer et/ou adapter des flux de travail et/ou des étapes de travail appropriés pour atteindre ces objectifs de recherche et de développement;
l'unité d'exécution (140) étant configurée pour
sélectionner un flux de travail pour atteindre un objectif de développement en fonction de l'objectif de développement et/ou
sélectionner une étape de travail suivante parmi un ensemble d'étapes de travail d'un flux de travail sélectionné, en particulier en fonction d'une étape de travail précédente et/ou d'un résultat d'une étape de travail précédente.

2. Système de recherche et développement (100) selon l'une des revendications précédentes, dans lequel l'unité d'exécution (140) étant conçue pour sélectionner un terminal (170) destiné à exécuter une étape de travail, notamment en fonction du type, de l'étendue et/ou du moment de l'étape de travail à exécuter et/ou du type, de l'étendue, du moment et/ou de l'état de satisfaction des conditions de disponibilité du terminal (170).

3. Système de recherche et développement (100) selon la revendication précédente, dans lequel le système de recherche et développement (100) comprend une unité de collecte de données (150) qui est conçue pour
localiser, saisir et/ou enregistrer dans la base de données de graphes (110) des informations pertinentes pour un objectif de recherche sélectionné, notamment des articles spécialisés, des publications, des séries d'expériences, des exposés, des commentaires et/ou d'autres enregistrements et/ou documentations pertinents; et/ou
localiser, saisir, identifier en termes de genèse et d'origine et/ou enregistrer dans la base de données de graphes (110) le résultat de l'exécution d'une étape de travail par un terminal (170).

4. Système de recherche et développement (100) selon l'une des revendications précédentes, le système de recherche et développement (100) comprenant une unité de saisie de données (150) qui est conçue pour saisir et/ou enregistrer dans la base de données graphique (110)
des informations sur la nature, l'étendue et/ou le moment de la disponibilité et/ou de l'indisponibilité d'un terminal (170), et/ou
des informations relatives aux conditions techniques, administratives, juridiques, contractuelles et/ou autres de la disponibilité d'un terminal (170) et au statut de respect des conditions de disponibilité.

5. Système de recherche et développement (100) selon l'une des revendications précédentes, le système de recherche et développement (100) comprenant une interface homme-machine interactive (160) qui est conçue pour
représenter graphiquement les résultats d'une étape de travail et/ou des étapes de travail d'un flux de travail,
représenter un flux de travail, une étape de travail, la disponibilité d'un terminal pour l'exécution d'une étape de travail et/ou
de recevoir une entrée d'un utilisateur humain pour la sélection d'un flux de travail, d'une étape de travail et/ou d'un terminal (170) à exécuter pour la réalisation d'une étape de travail.

6. Système de recherche et développement (100) selon l'une des revendications précédentes, le système de recherche et développement (100) comprenant un serveur, un système cloud, un terminal (170), une unité de calcul en périphérie (180) et/ou une unité de calcul dans le brouillard (190), qui, dans un mode de réalisation préféré, sont compatibles avec l'IoT.

7. Système de recherche et développement (100) selon l'une des revendications précédentes, dans lequel la base de données orientée graphe (110), l'unité de traitement de données (130), l'unité d'exécution (140), l'unité de collecte de données (150), le terminal (170), l'unité de calcul en périphérie (180), l'unité de fog computing (190) et/ou l'interface homme-machine interactive (160) sont configurées pour appliquer des méthodes d'intelligence artificielle (IA), en particulier d'apprentissage automatique (ML) et/ou d'apprentissage profond (DL), et/ou pour fournir des résultats en temps réel.

8. Procédé d'exploitation d'un système de recherche et développement (100) selon l'une des revendications précédentes, **caractérisé en ce qu'**il comprend une ou plusieurs des étapes a) à k) et les exécute, de préférence en utilisant des méthodes d'intelligence artificielle et/ou en temps réel:
a) stockage de données dans une base de données de graphes (110) selon un modèle de données qui représente une ontologie (16) bien définie;
b) uniformiser, compléter et/ou enrichir les données stockées dans la base de données de graphes (110);
c) identification de relations statistiques et/ou causales entre les données stockées dans la base de données orientée graphe (110) et/ou modélisation de ces relations à l'aide de modèles statistiques (33) et/ou de modèles physico-chimiques (34);
d) identification d'objectifs de recherche et de développement contenus dans les données stockées et/ou génération de workflows et/ou d'étapes de travail adaptés à la réalisation des objectifs de recherche et de développement;
e) sélection d'un flux de travail pour atteindre un objectif de développement en fonction de l'objectif de développement et/ou sélection d'une étape de travail parmi un ensemble d'étapes de travail d'un flux de travail sélectionné, notamment en fonction d'une étape de travail précédente et/ou d'un résultat d'une étape de travail précédente;
f) sélection d'un terminal (170) pour l'exécution d'une étape de travail, notamment en fonction du type, de l'étendue et/ou du moment de l'étape de travail à exécuter et/ou du type, de l'étendue, du moment et/ou de l'état de satisfaction des conditions de disponibilité du terminal (170);
g) analyser un résultat d'une étape de travail par une unité de calcul en périphérie (180) et/ou une unité de calcul dans le brouillard (190) et/ou transmettre le résultat de l'analyse en tant que résultat de l'étape de travail;
h) saisir, identifier en fonction de la genèse et de l'origine et/ou enregistrer dans la base de données de graphes (110) un résultat d'une étape de travail;
i) localisation, saisie et/ou enregistrement dans la base de données de graphes (110) d'informations pertinentes pour un objectif de recherche, en particulier des articles spécialisés, des publications, des séries d'expériences, des exposés, des commentaires et/ou d'autres enregistrements et/ou documentations pertinents;
j) localisation, saisie et/ou enregistrement dans la base de données de graphes (110) d'informations sur la nature, l'étendue, moment de la disponibilité et/ou de l'indisponibilité d'un terminal (170), aux conditions techniques, administratives, juridiques, contractuelles et/ou autres de la disponibilité d'un terminal (170) et/ou à l'état de respect des conditions de disponibilité;
k) représentation graphique d'un résultat d'une étape de travail, de plusieurs étapes de travail d'un flux de travail, d'un flux de travail, d'une étape de travail et/ou de la disponibilité d'un terminal pour l'exécution d'une étape de travail, et/ou
réception d'une sélection, par un utilisateur humain, d'un flux de travail à exécuter, d'une étape de travail et/ou d'un terminal pour l'exécution d'une étape de travail.
